# EUROPÄISCHE PATENTSCHRIFT

(11) **EP 3 405 322 B1**
(45) Veröffentlichungstag und Bekanntmachung des Hinweises auf die Patenterteilung: **16.03.2022**
(21) Anmeldenummer: 17700954.5
(22) Anmeldetag: 18.01.2017
(51) Int. Cl.: B29C 44/44, B29C 33/02, B29C 35/08

(54) **VERFAHREN UND VORRICHTUNG ZUR HERSTELLUNG EINES PARTIKELSCHAUMSTOFFTEILS**
METHOD AND DEVICE FOR PRODUCING A PARTICLE FOAM PART
PROCÉDÉ ET DISPOSITIF POUR PRODUIRE UNE PIÈCE EN MOUSSE PARTICULAIRE

(30) Priorität: 18.01.2016 DE 102016100690
(43) Veröffentlichungstag der Anmeldung: 28.11.2018
(73) Patentinhaber: Kurtz GmbH, 97892 Kreuzwertheim (DE)
(72) Erfinder: ROMANOV, Victor, 97877 Wertheim (DE); LUDWIG, Stefan, 97842 Karbach (DE); REUBER, Norbert, 97851 Bergrothenfels (DE)
(74) Vertreter: HGF
(86) Internationale Anmeldenummer: PCT/EP2017/050940
(87) Internationale Veröffentlichungsnummer: WO 2017/125410

(56) Entgegenhaltungen:
- EP-A2- 1 990 170
- WO-A1-2004/103687
- DE-A1-102014 207 580
- DE-C1- 19 860 611
- GB-A- 1 318 230
- US-A- 3 015 851
- US-A- 4 851 167
- US-A- 5 082 436
- US-A- 5 139 407
- US-A- 5 516 470
- US-A- 5 973 308
- US-A1- 2011 068 511
- US-A1- 2014 243 442
- US-B1- 6 241 929

## Beschreibung

Die vorliegende Erfindung betrifft ein Verfahren und eine Vorrichtung zur Herstellung eines Partikelschaumstoffteils.

WO 2013/05081 A1 bzw. US 2014/0243442 A1 offenbaren ein Verfahren gemäß dem Oberbegriff des Anspruchs 1 und eine Vorrichtung gemäß dem Oberbegriff des Anspruchs 11. Aus ihnen geht ein Verfahren zur Herstellung von Partikelschaumstoffteilen hervor, bei welchen eine Mischung aus Schaumstoffpartikeln und dielektrischer Transferflüssigkeit mittels elektromagnetischer Wellen erhitzt wird, um die Schaumstoffpartikel zu einem Partikelschaumstoffteil zu verschmelzen. Als elektromagnetische Wellen werden Radiowellen oder Mikrowellen verwendet. Das Material der Schaumstoffpartikel ist aus Polypropylen (PP) ausgebildet.

Aus der US 3,060,513 geht ein Verfahren zum Sintern von feuchten thermoplastischen Schaumstoffpartikel hervor. Die Partikel werden dielektrisch erhitzt und gleichzeitig in der Form komprimiert. Es werden elektromagnetische Wellen bei einer Frequenz von etwa 2 bis 1000 MHz angelegt.

Ein ähnliches Verfahren ist in der US 3,242,238 beschrieben, bei welchen Schaumstoffpartikel mit einer wässrigen Lösung befeuchtet werden und einem elektromagnetischen Feld mit einer Frequenz von etwa 5 bis 100 MHz ausgesetzt sind.

In der GB 1,403,326 ist ein Verfahren zum Verschweißen von expandierbaren Polystyrolschaumstoffpartikel beschrieben, bei welchem die Partikel mit einer wässrigen Lösung befeuchtet werden und einem elektromagnetischen Feld von 5 bis 2000 MHz ausgesetzt werden.

Aus der WO 01/64414 A1 geht ein weiteres Verfahren hervor, bei dem Polymerpartikel aus Polyolefinen, die mit einem flüssigen Medium benetzt sind, mit elektromagnetischen Wellen, insbesondere Mikrowellen erhitzt werden. Hierbei wird die Temperatur im Formwerkzeug mittels Steuern des darin befindlichen Druckes geregelt.

Bei den oben erläuterten Verfahren werden jeweils feuchte Schaumstoffpartikel mit elektromagnetischen Wellen erhitzt, wobei die elektromagnetische Energie von der Flüssigkeit absorbiert und auf die Partikel übertragen wird.

Aus der US 5,128,073 gehen thermoplastische Partikel hervor, die mit einem Hochfrequenzenergie absorbierenden Material beschichtet sind. Diese Partikel können mit elektromagnetischen Wellen erhitzt werden, wobei die Beschichtung die elektromagnetische Energie aufgibt und auf die Schaumstoffpartikel abgibt. Zum Verschweißen der Schaumstoffpartikel werden elektromagnetische Wellen im Bereich vom 40 MHz bis 2450 MHz verwendet.

Aus der US 2009/ 0,243,158 A1 geht ein Verfahren, bei dem Schaumstoffpartikel unter Zugabe von Wasser mittels Mikrowellen verschweißt werden, wobei das Wasser durch die Mikrowelle erhitzt wird und die Wärme auf die Schaumstoffpartikel überträgt. Die Temperatur wird durch Einstellen des Druckes des Dampfes in der Form gesteuert.

Obwohl diese Verfahren seit Jahrzehnten bekannt sind, konnten sie sich in der Praxis nicht durchsetzen. Hierfür gibt es unterschiedliche Gründe. Ein wesentliches Problem bei diesem Verfahren ist es, die Übertragung der Wärme von der wässrigen Lösung auf die Schaumstoffpartikel, da sie nicht immer gleichmäßig erfolgt. Hierdurch erhält man keine gleichmäßige Verschweißung im Partikelschaumstoffteil. Zudem ist meistens so viel Feuchtigkeit notwendig, um ausreichend elektromagnetischen Wellen zu absorbieren, dass im fertigen Partikelschaumstoffteil oftmals eine zu hohe Restfeuchte enthalten ist, die die Qualität des Partikelschaumstoffteils beeinträchtigt.

In der Praxis werden daher fast ausschließlich Schaumstoffpartikel mittels gesättigtem Trockendampf verschweißt, wie es bspw. aus der WO 2014/128214 A1 bekannt ist. Gegenüber dem Verschweißen mit Dampf konnte sich das Verschweißen mittels elektromagnetischer Wellen in der Praxis nie durchsetzen, obwohl das Verschweißen von elektromagnetischen Wellen prinzipbedingt erhebliche Vorteile hätte. Bei elektromagnetischen Wellen könnte die Energie wesentlich gezielter übertragen werden, wodurch es nicht notwendig wäre, Hilfskörper zu erhitzen. Bei der Verwendung von Dampf muss dieser zunächst in einem Dampfgenerator erzeugt werden. Dann muss der Dampf über Leitungen dem Werkzeug zugeführt werden. Alle diese Teile müssen auf eine ausreichend hohe Temperatur erhitzt werden, so dass der Dampf hierin nicht kondensiert. Dies verursacht einen erheblichen Wärmeverlust. Zudem beanspruchen die Geräte zur Dampferzeugung und Dampfleitung den meisten Bauraum an der Vorrichtung zur Herstellung des Partikelschaumstoffteils. Wenn man keinen Dampf zum Verschweißen der Schaumstoffpartikel benötigen würde, dann könnte man die gesamte Vorrichtung wesentlich kompakter ausbilden.

Die DE 199 21 742 A1 betrifft ein Verfahren zum Aufschäumen von Kunststoff mittels elektromagnetischer Wellen. Dem Polymermaterial können leitende Partikel, insbesondere Graphit, hinzugefügt werden.

Aus der DE 21 22 482 A geht ein weiteres Verfahren zum Aufschäumen von Polymeren mittels elektromagnetischer Wellen hervor. Hier wird als Polymermaterial Polyurethan verwendet. Die elektrische Hochfrequenzenergie kann durch Mikrowellen und/oder RF-Strahlung dem Polymermaterial zugeführt werden.

Der Erfindung liegt die Aufgabe zugrunde ein Verfahren und eine Vorrichtung zur Herstellung eines Partikelschaumstoffteils zu schaffen, mit welchem expandierbare thermoplastische Schaumstoffpartikel effizient und zuverlässig verschweißt werden können.

Aus der DE 198 16 611 C1 geht ein Verfahren zur Herstellung von Formkörpern aus Schaumstoffpartikel hervor, bei dem die Schaumstoffpartikel in Form gebracht und durch Mikrowellenenergie miteinander verschweißt werden. Es sollen Schaumstoffpartikel aus einem Mikrowellen-absorbierenden Polymer eingesetzt werden, oder es werden Schaumstoffpartikel aus einem im Wesentlichen Mikrowellen-durchlässigen Polymer eingesetzt, die mit einem Mikrowellen-absorbierenden Medium versetzt werden. Mikrowellen-absorbierende Polymere sind hierin nicht offenbart, wohingegen diverse Medien, wie zum Beispiel Wasser, Alkohol, Metallpulver oder Ruß angegeben sind, welche Mikrowellen absorbieren können.

Die US 4,851,167 A betrifft ein Verfahren zum Aufschäumen von Kunststoff, bei dem in einer Form eine Membran angeordnet ist, welche mittels eines dielektrischen Fluids derart beaufschlagbar ist, dass die Membran an den nicht geschäumten Kunststoffmaterial anliegen kann, und kein Hohlraum in der Form besteht. Hierdurch wird eine gleichmäßige Erhitzung erzielt, so dass das nicht-geschäumte Kunststoffmaterial entsprechend gleich-mäßig aufschäumt.

Die GB 1 318 230 A betrifft ein Verfahren zum Herstellen eines Formkörpers aus Schaumstoffpartikel, welche beispielsweise aus Polystyrol ausgebildet sind, wobei die Schaumstoffpartikel mittels einer Polyurethanschaum-Matrix verbunden sind. Die Polyurethanschaum-Matrix kann mittels elektromagnetischer Wellen erhitzt werden.

Die Aufgabe wird durch die Gegenstände der unabhängigen Patentansprüche gelöst. Vorteilhafte Ausgestaltungen sind in den jeweiligen Unteransprüchen angegeben.

Beim erfindungsgemäßen Verfahren zur Herstellung eines Partikelschaumstoffteils werden Schaumstoffpartikel in einem Formwerkzeug erhitzt, so dass sie zum Partikelschaumstoffteil verschweißen. Den Schaumstoffpartikeln wird Wärme mittels elektromagnetischer RF-Strahlung zugeführt. Die Schaumstoffpartikel sind aus Polyurethan (PU), Polylactat (PLA), Polyethylen-Block-Amid (PEBA) oder aus Polyethylenterephtalat (PET) ausgebildet.

Die Schaumstoffpartikel bestehen zum überwiegenden Teil aus Polyurethan, Polylactat (PLA), Polyethylen-Block-Amid (PEBA), aus Polyethylenterephtalat oder einem Gemisch dieser Materialien. Vorzugsweise bestehen die Schaumstoffpartikel zu 90 Gew.% aus einem oder einer Mischung dieser Materialien.

Die Erfinder der vorliegenden Erfindung haben festgestellt, dass diese Materialien elektromagnetische RF-Strahlung gut absorbieren, so dass anders als bei herkömmlichen Verfahren, kein dielektrisches Wärmeübertragungsmittel notwendig ist. Da die elektromagnetische RF-Strahlung unmittelbar von den Schaumstoffpartikeln absorbiert und in Wärme umgewandelt wird, wird ein sehr gezielter und gleichmäßiger Wärmeeintrag erreicht. Die Schaumstoffpartikel werden gleichmäßig erhitzt, so dass eine homogene Verschweißung im Partikelschaumstoffteil erzielt wird.

Mit der Erfindung werden die Schaumstoffpartikel vor allem durch unmittelbare Absorption der RF-Strahlung erhitzt. Das heißt, dass die Wärme nicht oder nur zu einem geringen Teil über ein wärmevermittelndes Medium, wie z. B. Wasser, das die RF-Strahlung absorbiert und an die Schaumstoffpartikel abgibt, erhitzt wird. Die unmittelbare Absorption der RF-Strahlung ist zum einen sehr effizient und erlaubt auch die Verschweißung von Schaumstoffpartikel, die aus Materialien, wie z. B. Polyethylenterephtalat (PET) bestehen, deren Erweichungstemperatur über 200°C (in der Regel bei ca. 260°C) liegt, was durch Erhitzen mit einem wässrigen Wärmeübertragungsmittel nicht möglich ist. Zudem wird die Verwendung derartiger Wärmeübertragungsmittel vermieden bzw. reduziert, die die Qualität des Endproduktes stören können.

Wie es unten noch näher erläutert wird, können am Randbereich der Partikelschaumstoffteile zusätzliche Einrichtungen und Mittel, wie z. B. Wärmeübertragungsmittel, vorgesehen werden, um den Randbereich der Partikelschaumstoffteile zusätzlich zu erhitzen. Die einzelnen Schaumstoffpartikel sind sehr gute Wärmeisolatoren, weshalb beim Verschweißen einzelner Schaumstoffpartikel in der Werkzeugform oftmals eine erhebliche Temperaturdifferenz zwischen dem inneren des Partikelschaumstoffteils und der inneren Oberfläche des Werkzeuges besteht. Der Verlauf der Temperaturdifferenz erstreckt sich in der Regel lediglich über die äußerste Lage bzw. über die äußersten beiden Lagen der Schaumstoffpartikel. Deshalb kann es zweckmäßig sein, diesen Randbereich der Partikelschaumstoffteile zusätzlich zu erhitzen. Abgesehen von diesem Randbereich, der aus einer, zwei oder einigen wenigen Lagen von Schaumstoffpartikel besteht, wird das Partikelschaumstoffteil durch unmittelbare Absorption der elektromagnetischen RF-Strahlung durch die Schaumstoffpartikel erhitzt.

Die elektromagnetische RF-Strahlung weist vorzugsweise eine Frequenz von zumindest 30 KHz bzw. zumindest 0,1 MHz, insbesondere zumindest 1 MHz bzw. zumindest 2 MHz vorzugsweise zumindest 10 MHz auf.

Die elektromagnetische RF-Strahlung weist vorzugsweise eine Frequenz von maximal 300 MHz auf.

Die Schaumstoffpartikel können aus einem einheitlichen Material oder homogenen Material bestehen.

Die Schaumstoffpartikel können im Formwerkzeug komprimiert werden. Komprimieren bedeutet hier, dass die Schaumstoffpartikel mechanisch zusammengedrückt werden, ohne die Wirkung der thermischen Expansion, die aufgrund des zum Verschweißen notwendigen Erhitzens im Formwerkzeug stattfindet. Das Komprimieren der Schaumstoffpartikel kann beispielsweise durch eine Druckbefüllung oder Gegendruckbefüllung des Formwerkzeuges mit den Schaumstoffpartikeln erfolgen. Das Komprimieren kann auch durch ein Zusammendrücken zweier Formhälften des bereits mit Schaumstoffpartikel gefüllten Formwerkzeuges erfolgen. Solche Formwerkzeuge, welche im befüllten Zustand zusammendrückbare Formhälften aufweisen, werden als Crackspalt-Formwerkzeuge bezeichnet.

Vorzugsweise wird die Temperatur der im Formwerkzeug befindlichen Schaumstoffpartikel gemessen. Die Zuführung der Wärme mittels elektromagnetischer RF-Strahlung kann in Abhängigkeit der gemessenen Temperatur gesteuert werden. Die Temperaturmessung kann mittels elektrischer Temperatursensoren als auch faseroptischer Temperatursensoren ausgeführt werden.

Die das Formnest begrenzende Oberfläche des Werkzeuges kann temperiert werden. Je nach Größe des herzustellenden Partikelschaumstoffteils und in Abhängigkeit von dem verwendeten Kunststoffmaterial können unterschiedliche Temperaturen eingestellt werden. Das Formwerkzeug wird vorzugsweise auf eine Temperatur im Bereich von etwa 50°C bis etwa 150°C temperiert.

Nach dem Verschweißen der Schaumstoffpartikel zu dem Partikelschaumstoffteil kann dieses stabilisiert werden. Das Stabilisieren erfolgt durch Vorhalten des Partikelschaumstoffteils im Werkzeug, wobei das Werkzeug nicht geöffnet wird und die Form des Formnestes unverändert aufrechterhalten wird. Beim Stabilisieren kann sich die Wärme innerhalb des Partikelschaumstoffteils gleichmäßig verteilen und das Partikelschaumstoffteil kann auch langsam abkühlen.

Vorzugsweise wird vor, während und/oder nach dem Verschweißen ein Vakuum an das Formwerkzeug angelegt. Hierdurch wird v. a. Feuchtigkeit aus dem Formnest und aus dem zu verschweißenden Kunststoffmaterial abgezogen.

Das Formwerkzeug besteht vorzugsweise aus einem für die verwendete elektromagnetische RF-Strahlung im Wesentlichen transparentem Material, wie z. B. Polytetrafluorethylen (PTFE), Polyethylen, insbesondere UHMWPE, Polyetherketon (PEEK) und andere für RF-Strahlung transparente Materialien.

Zur Erzeugung der elektromagnetischen RF-Strahlung sind zwei oder mehr Kondensatorplatten vorgesehen, welche an einem ansonsten aus einem elektrisch isolierenden Material ausgebildetem Formwerkzeug angeordnet sind. An die Kondensatorplatten wird eine Hochfrequenzspannung mit einer Amplitude von etwa zumindest 1 kV, vorzugsweise zumindest 10 kV und insbesondere zumindest 20 kV angelegt.

Das Formwerkzeug kann im Bereich zwischen den jeweiligen Kondensatorplatten unterschiedliche Dicken aufweisen, so dass der Formraum durch dreidimensionale konturierte innere Begrenzungsflächen begrenzt ist. Hierdurch können entsprechend dreidimensional konturierte Partikelschaumstoffteile hergestellt werden. Unter einer dreidimensionalen konturierten Begrenzungsfläche wird eine Fläche verstanden, die keine ebene Fläche ist. Eine solche Ausbildung des Formwerkzeugs ist vor allem für die Herstellung von Partikelschaumstoffteilen von Vorteil, die im Wesentlichen überall die gleiche Dichte an Schaumstoffpartikel aufweisen.

Das Formwerkzeug kann Mittel zum Temperieren des Formwerkzeuges im Bereich einer inneren, den Formraum begrenzenden Begrenzungsfläche aufweisen. Das Formwerkzeug weist Mittel zum Zuführen eines Heizmediums zu dem an der inneren Begrenzungsfläche anliegenden Bereich des Partikelschaumstoffteils auf. Hierdurch wird beim Herstellen eines Partikelschaumstoffteils dem Bereich an der Oberfläche des Partikelschaumstoffteils zusätzlich Wärme zugeführt. Es hat sich gezeigt, dass wenn dem Oberflächenbereich nicht zusätzlich Wärme zugeführt wird, dieser Bereich langsamer als der zentrale Bereich des Partikelschaumstoffteils erhitzt wird, wodurch es zu ungleichmäßigen Verschweißungen kommen kann. Mit dieser Ausbildung des Formwerkzeuges wird einer solchen ungleichmäßigen Verschweißung entgegen gewirkt.

Das Formwerkzeug weist einen porösen Formkörper auf, der zumindest einen Teil der inneren Begrenzungsfläche ausbildet und kommunizierend mit einer Einrichtung zum Zuführen eines Heizfluids verbunden ist. Als Heizfluid wird beispielsweise heißer Dampf verwendet. Durch das Zuführen von heißem Dampf in dem porösen Formkörper wird einerseits der poröse Formkörper selbst temperiert und andererseits kann durch die Poren des porösen Formkörpers Dampf in den Formraum eindringen und den Oberflächenbereich des mit dem Formwerkzeug herzustellenden Schaumstoffteils erhitzen. Der poröse Formkörper ist derart ausgebildet, dass über dem Bereich des Formkörpers hinweg gleichmäßig das erhitzte Fluid aus diesem austreten kann. Der durch die Poren des Formkörpers ausgebildete Strömungsquerschnitt ist jedoch wesentlich kleiner als bei herkömmlichen Formwerkzeugen, mit welchen die Schaumstoffpartikel ausschließlich mit Dampf erhitzt werden. Dieser poröse Formkörper dient lediglich der oberflächlichen Zuführung von Wärme an das Partikelschaumstoffteil.

Das Formwerkzeug kann zumindest einen Kanal zum Zuführen bzw. Durchleiten eines Heizfluids aufweisen. Hierdurch kann das Formwerkzeug selbst temperiert werden. Der Kanal kann jedoch auch mit in den Formraum mündenden Öffnungen, wie beim oben erläuterten porösen Formkörper, verbunden sein, so dass das Heizfluid in den Formraum eintritt. Es ist bevorzugt, wenn eine Vielzahl von Öffnungen vorgesehen ist, die verteilt über die Begrenzungsfläche angeordnet sind, so dass auch bei einem geringen Fluss des Heizfluids eine gleichmäßige Erwärmung der Oberfläche des Partikelschaumstoffteils stattfindet.

Bei den oben erläuterten Ausführungsformen kann Dampf, insbesondere Wasserdampf, dem Formraum zugeführt werden. Das hiermit in den Formraum zugeleitete Wasser kann auch die RF-Strahlung absorbieren und in Wärme umwandeln. Die zugeführte Menge an Heizfluid ist jedoch vorzugsweise so gering, dass die Schaumstoffpartikel vor allem durch die direkte Absorption der RF-Strahlung erhitzt werden. Vorzugsweise beträgt die zugeführte Wärmemenge über die direkte Absorption von RF-Strahlung zumindest 50 % der gesamten dem Formraum zugeführten Wärmemenge, vorzugsweise zumindest 75 % der gesamten dem Formraum zugeführten Wärmemenge und insbesondere zumindest 90 % der gesamten dem Formraum zugeführten Wärmemenge.

Eine weitere Möglichkeit zur Temperierung der inneren Begrenzungsfläche des Formwerkzeuges besteht darin, die innere Begrenzungsfläche mit einer Schicht aus einem Material, das für RF-Strahlung nicht transparent ist, zu versehen. Diese Schicht wird als passive Heizschicht bezeichnet. Die passive Heizschicht kann aus einem temperarturstabilen, für RF-Strahlung nicht transparenten Material ausgebildet sein. Geeignete Materialien sind entsprechende Kunststoffe oder Ferrite.

Zur Temperierung der inneren Begrenzungsfläche des Formwerkzeugs kann alternativ oder zusätzlich eine elektrische Heizeinrichtung benachbart zur inneren Begrenzungsfläche des Formwerkzeugs im Formwerkzeug angeordnet sein. Die elektrische Heizeinrichtung weist vorzugsweise einen oder mehrere Heizdrähte auf, welche benachbart zur inneren Begrenzungsfläche des Formwerkzeugs angeordnet sind. Die Heizdrähte können in Zickzack- oder Wellenlinien verlaufend angeordnet sein, sodass ein flächiger Bereich der Begrenzungsfläche mit einem einzigen Heizdraht erhitzt werden kann. Der bzw. die Heizdrähte sind an eine Stromquelle angeschlossen, mit welcher ein Strom zum Beheizen der Heizdrähte angelegt werden kann.

Die Heizdrähte können auch zum Messen der Temperatur des Formwerkzeugs im Bereich der inneren Oberfläche verwendet werden. Hierzu wird vorzugsweise ein Heizdraht verwendet, dessen elektrischer Widerstand sich im hier relevanten Temperaturbereich von 60 bis 250°C stark verändert.

Während des Anlegens der RF-Strahlung wird der bzw. werden die Heizdrähte von der Stromquelle möglichst getrennt, damit durch die RF-Strahlung keine unkontrollierten Ströme in dem durch die Stromquelle geschlossenen Stromkreis fließen können. Die RF-Strahlung kann dennoch in dem bzw. den Heizdrähten eine wechselweise Ladungsverschiebung verursachen, wodurch eine gewisse Erwärmung der Heizdrähte verursacht wird. Dies ist bei der Temperierung des Formraums zu berücksichtigen. Vorzugsweise ist der bzw. sind die Heizdrähte in Äquipotenzialflächen der RF-Strahlung angeordnet, wodurch keine Ströme in dem bzw. in den Heizdrähten induziert werden. Diese Äquipotenzialflächen verlaufen in der Regel parallel zu den Kondensatorplatten.

Mit dem zusätzlichen Beheizen des Randbereiches der Partikelschaumstoffteile kann sichergestellt werden, dass das Partikelschaumstoffteil im Bereich der Oberfläche durch das zusätzliche Erhitzen zuverlässig verschweißt wird.

Durch das zusätzliche Beheizen der inneren Begrenzungsfläche des Formwerkzeugs ist es auch möglich, das Formwerkzeug vor dem eigentlichen Verschweißungs- bzw. Sintervorgang auf eine vorbestimmte, reproduzierbare Starttemperatur zu erhitzen, sodass die Herstellung jedes Partikelschaumstoffteils mit der gleichen Temperatur der innere Begrenzungsfläche des Formwerkszeugs beginnt. Hierdurch kann der Herstellungsprozess der Partikelschaumstoffteile erheblich stabilisiert werden. Ist das Formwerkzeug von unmittelbar kurz vorher ausgeführten Verschweißungs- bzw. Sintervorgängen bereits erhitzt, dann ist keine oder lediglich eine geringe Vorheizung notwendig, wohingegen ein sich auf Raumtemperatur befindliches Formwerkzeug zunächst auf die Starttemperatur zu erhitzen ist. Die Starttemperatur liegt typischerweise im Bereich von 10°C bis 50°C unterhalb der Erweichungstemperatur des zu verschweißenden Materials.

Eine solche Verhautung kann auch alternativ durch Einlegen einer Folie in das Formwerkzeug erzeugt werden, wobei die Folie mit dem Partikelschaumstoffteil verschmolzen wird und eine die Oberfläche begrenzende Schicht bildet. Die Folie besitzt eine höhere Dichte als die Schaumstoffpartikel, wodurch die Folie die elektromagnetische RF-Strahlung stärker absorbiert als die Schaumstoffpartikel. Hierdurch wird die Folie stärker aufgehitzt und verschmilzt mit den außenliegenden Schaumstoffpartikeln des Partikelschaumstoffteils. Die Folie ist vorzugsweise aus dem gleichen Material wie die Schaumstoffpartikel oder aus einem Material, das eine ähnliche Erweichungstemperatur wie das Material der Schaumstoffpartikel aufweist.

Die Kondensatorplatten des Formwerkzeuges können an die Kontur der inneren Begrenzungsflächen des Formwerkzeugs angepasst sein. Hierbei ist vorzugsweise der Abstand zwischen den einander gegenüberliegenden Kondensatorplatten überall etwa gleich groß. Dadurch, dass die Kondensatorplatten der Kontur der inneren Begrenzungsflächen des Formwerkzeugs angepasst sind, kann der Abstand zwischen den beiden Kondensatorplatten gering gehalten werden, obwohl Partikelschaumstoffteile ausgeformt werden, die dreidimensional konturiert sind und sich in alle drei Raumrichtungen erheblich erstrecken können. Dies gilt insbesondere für schalenförmige Körper, wie Kisten, Kugelsegmentschalen und dergleichen.

Die Kondensatorplatten können eine dreidimensional konturierte Form aufweisen, wobei ein Abschnitt der Kondensatorplatten, der zu einem Bereich des Formraums weist, in dem bei Benutzung die Schaumstoffpartikel stärker verdichtet sind als in einem anderen Bereich, weiter entfernt vom Formraum angeordnet ist, als ein Abschnitt der Kondensatorplatten, der zu einem Bereich des Formraums weist, in dem die Schaumstoffpartikel weniger verdichtet sind. Es hat sich gezeigt, dass je dichter die Schaumstoffpartikel im Formraum komprimiert sind, desto mehr Energie absorbieren sie. Hierdurch kann es zu unterschiedlichen Erhitzungen kommen. Dem wird bei dieser Ausführungsform entgegen gewirkt, indem das elektromagnetische Feld durch Einstellung des Abstandes unterschiedlicher Abschnitte der Kondensatorplatten entsprechend geformt wird, so dass das elektromagnetische Feld im Bereich höherer Verdichtung von Schaumstoffpartikel eine geringere Intensität als in einem Bereich mit geringerer Verdichtung der Schaumstoffpartikel aufweist.

Die Kondensatorplatten können einteilig ausgebildet und dreidimensional konturiert geformt sein. Die Kondensatorplatten können jedoch auch aus mehreren Segmenten ausgebildet sein. Die mehreren Segmente können unabhängig voneinander im Abstand zum Formraum einstellbar sein. Diese Einstellung kann wiederholbar sein, wobei entsprechende Fixierelemente zum Fixieren der Position der Abschnitte der Kondensatorplatten vorgesehen sind. Die Einstellung kann auch einmalig ausführbar sein, wobei die Abschnitte der Kondensatorplatten bzw. daran angeordnete Elemente, wie z. B. Stangen, in einen Kunststoffkörper eingegossen werden.

Die Kondensatorplatten können auch zum gezielten Kühlen des Formwerkzeugs nach dem Herstellen eines Partikelschaumstoffteils verwendet werden. Vorzugsweise weisen die Kondensatorplatten Kühlelemente auf. Die Kühlelemente können Kühlrippen sein, welche mit einem Gebläse aktiv mit Kühlluft beaufschlagt werden. Die Kühlelemente können alternativ oder zusätzlich auch Kühlleitungen sein, welche an die Kondensatorplatten gekoppelt sind. Durch die Kühlleitungen wird ein Kühlmedium, wie z. B. Wasser oder Öl, geleitet, um bei Bedarf die Kondensatorplatten zu kühlen. Die Kondensatorplatten können auch mit einer Stelleinrichtung selbsttätig mit den Körpern des Formwerkzeugs in Kontakt gebracht werden, sodass die in den Körpern des Formwerkzeugs enthaltene Wärme über die Kondensatorplatten abgeleitet wird. Beim Erwärmen können die Kondensatorplatten von diesen Körpern abgehoben werden, um keine unerwünschte Kühlung der Körper des Formwerkzeugs zu erzeugen.

Das Kühlen des Werkzeugs mittels der Kondensatorplatten kann durch Messen der Temperatur des Formwerkzeugs in einer geschlossenen Regelschleife geregelt werden. Als Temperatursensor kann u. a. der oben erläuterte Heizdraht verwendet werden.

Die Erfindung wird nachfolgend beispielhaft anhand der Zeichnung näher erläutert. Die Zeichnung zeigt in:

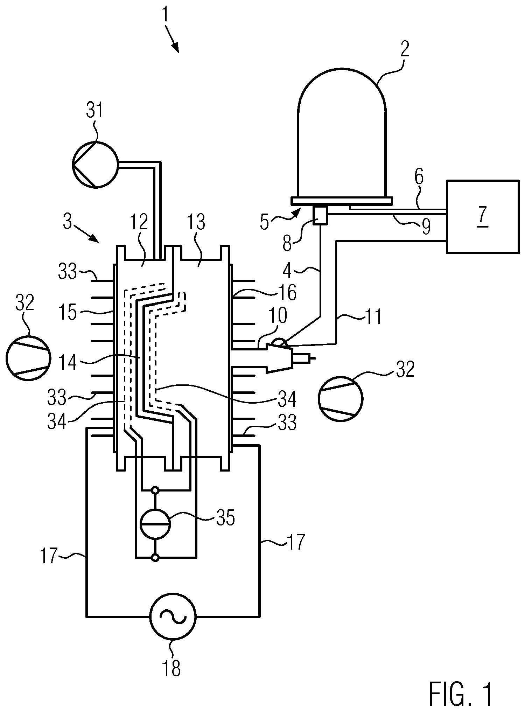

- Figur 1: schematisch ein Ausführungsbeispiel einer Vorrichtung zur Herstellung eines Partikelschaumstoffteils,
- Figur 2 bis 6: jeweils schematisch unterschiedliche Werkzeuge für eine Vorrichtung zur Herstellung eines Partikelschaumstoffsteils in einer Querschnittsansicht,
- Figur 7a bis 7k: jeweils ein Partikelschaumstoffteil, das durch Verschweißen mit einer RF-Strahlung hergestellt ist.

Eine Vorrichtung 1 zur Herstellung eines Partikelschaumstoffteils umfasst einen Materialbehälter 2, ein Formwerkzeug 3 und eine Leitung 4, die vom Materialbehälter 2 zum Formwerkzeug 3 führt.

Der Materialbehälter 2 dient zur Aufnahme loser Schaumstoffpartikel. Der Materialbehälter 2 weist einen Boden 5 auf, wobei er im Bodenbereich über eine Druckluftleitung 6 mit einer Druckluftquelle 7 verbunden ist. Die Druckluftleitung 6 ist mit mehreren im Boden 5 angeordneten Düsen (nicht dargestellt) verbunden, so dass in dem Materialbehälter 2 mehrere Luftströme (= Fluidisierluft) eingeleitet werden können, die die darin befindlichen Schaumstoffpartikel verwirbeln und dadurch vereinzeln.

Im Bereich des Bodens 5 des Materialbehälters 2 ist eine Öffnung ausgebildet, an welche die Förderleitung 4 angeschlossen ist. Die Öffnung ist mittels eines Schiebers (nicht dargestellt) verschließbar.

Benachbart zum Materialbehälter befindet sich in der Förderleitung 4 eine Treibdüse 8. Die Treibdüse 8 ist mit einer weiteren Druckluftleitung 9 mit der Druckluftquelle 7 verbunden. Dieser Treibdüse 8 zugeführte Druckluft dient als Treibluft, da sie durch die Treibdüse 8 in die Förderleitung 4 eintritt und in Richtung zum Formwerkzeug 3 strömt. Hierdurch wird an der Treibdüse 8 an der zum Materialbehälter 2 weisenden Seite ein Unterdruck erzeugt, der aus dem Materialbehälter Schaumstoffpartikel ansaugt.

Die Förderleitung 4 mündet in einen Füllinjektor 10, der an das Formwerkzeug 3 gekoppelt ist. Der Füllinjektor 10 ist mit einer weiteren Druckluftleitung 11 mit der Druckluftquelle 7 verbunden. Die dem Füllinjektor 10 zugeführte Druckluft wird einerseits zum Füllen des Formwerkzeuges 3 verwendet, indem der Strom von Schaumstoffpartikeln mittels der Druckluft in Richtung zum Formwerkzeug 3 beaufschlagt wird. Andererseits kann die dem Füllinjektor 10 zugeführte Druckluft auch zum Zurückblasen der Schaumstoffpartikel aus der Förderleitung 4 in den Materialbehälter 2 verwendet werden, wenn der Füllvorgang am Formwerkzeug 3 abgeschlossen ist.

Das Formwerkzeug 3 ist aus zwei Formhälften 12, 13 ausgebildet. Zwischen den beiden Formhälften ist zumindest ein Formraum 14 begrenzt, in dem der Füllinjektor 10 zum Einbringen der Schaumstoffpartikel mündet. Das Volumen des Formraums 14 kann durch Zusammenfahren der beiden Formhälften 12, 13 verringert werden. Bei auseinander gefahrenen Formhälften 12, 13 ist ein Spalt zwischen den Formhälften 12, 13 ausgebildet, der als Crack-Spalt bezeichnet wird. Deshalb wird ein solches Formwerkzeug 3 auch als Crack-Spalt-Formwerkzeug bezeichnet.

Die Vorrichtung 1 weist keinen Dampfgenerator und keine Dampfzuführung zum Formraum 14 auf, wie es bei herkömmlichen Vorrichtungen zur Herstellung von Partikelschaumstoffteilen üblich ist. In dem Formraum 14 gelangt Feuchte alleine durch die im Material der Schaumstoffpartikel enthaltene Restfeuchte und durch die in der Druckluft enthaltene Feuchte. Weder den Schaumstoffpartikeln im Materialbehälter 2 noch während des Transportes zum Formraum 14 wird Wasser oder Dampf zugegeben.

An den Formhälften 12, 13 ist jeweils eine Kondensatorplatte 15, 16 angeordnet. Diese Kondensatorplatten bestehen jeweils aus einem gut elektrisch leitenden Material, wie z. B. Kupfer. An der Formhälfte 13 ist der Füllinjektor 10 angeordnet. Der Füllinjektor 10 erstreckt sich durch eine Ausnehmung in der Kondensatorplatte 16, welche auf der Formhälfte 13 angebracht ist.

Die Kondensatorplatten 15, 16 sind über elektrische Leitungen 17 zur Übertragung von Hochfrequenzspannungen mit einer Wechselspannungsquelle 18 verbunden.

Die Formhälften 12, 13 weisen jeweils einen Grundkörper auf, der aus einem elektrisch nicht leitenden und insbesondere für elektromagnetische RF-Strahlung transparentem Material, wie z. B. Polytetra-fluorethylen (PTFE), Polyethylen, insbesondere UHMWPE, Polyetherketon (PEEK) ausgebildet ist. Lediglich die Kondensatorplatten 15, 16 sind elektrisch leitend ausgebildet.

Das Formwerkzeug kann optional mit einer Unterdruckpumpe 31 verbunden sein, so dass ein Unterdruck bzw. Vakuum an den Formraum 14 angelegt werden kann. Dieser Unterdruck führt dazu, dass im Formraum 14 enthaltene Feuchte abgezogen wird.

Die Kondensatorplatten 15, 16 sind vorzugsweise mit einer Kühleinrichtung versehen. Im vorliegenden Ausführungsbeispiel ist die Kühleinrichtung durch Ventilatoren 32 ausgebildet, welche Kühlluft auf die vom Formraum 14 abgewandte Seite der Kondensatorplatten 15, 16 lenken. Zur Steigerung der Kühlwirkung sind an den Kondensatorplatten 15, 16 Kühlrippen 33 vorgesehen.

Alternativ oder zusätzlich können auch Kühlleitungen an den Kondensatorplatten 15, 16 angeordnet sein, durch welche ein Kühlmedium geführt wird. Als Kühlmedium wird vorzugsweise eine Flüssigkeit verwendet, wie z. B. Wasser oder Öl.

Im Folgenden wird ein Verfahren zum Herstellen von Partikelschaumstoffteilen mit der oben beschriebenen Vorrichtung erläutert:
Das Verfahren umfasst folgende grundsätzliche Schritte:
- Füllen des Formraums 14
- Verschweißen der Schaumstoffpartikel
- Stabilisieren (optional)
- Entformen
- Reinigen des Werkzeuges (optional)

Zum Befüllen des Formraums 14 wird über die Druckluftleitung 6 im Bereich des Bodens 5 des Materialbehälters Luft eingeblasen, um die darin befindlichen Schaumstoffpartikel zu verwirbeln und zu vereinzeln. Gleichzeitig wird der Treibdüse auch Treibluft zugeführt, so dass aus dem Materialbehälter 2 Schaumstoffpartikel in die Förderleitung 4 gesaugt und mit der Treibluft in Richtung zum Formwerkzeug 3 transportiert werden. Der Formraum 14 ist geschlossen, wobei die Formhälften 12, 13 vollständig zusammengefahren sein oder mit einem Crack-Spalt voneinander beabstandet sein können.

Der Schieber des Materialbehälters 2 kann aufeinanderfolgend geöffnet und geschlossen werden. Die Öffnungs- und Verschlusszeiten liegen typischerweise im Bereich von 500 ms bis 1 s. Durch dieses zyklische Öffnen und Schließen des Schiebers werden die Schaumstoffpartikel aus dem Materialbehälter 2 intermittierend der Förderleitung 4 zugeführt. Hierdurch kann eine Brückenbildung der Schaumstoffpartikel im Materialbehälter 2 aufgebrochen werden und die Schaumstoffpartikel werden vereinzelt. Dies ist insbesondere zweckmäßig bei Schaumstoffpartikeln mit einer adhäsiven Oberfläche, wie z. B. eTPU-Schaumstoffpartikel.

Ein intermittierendes Ansaugen kann auch alternativ durch ein intermittierendes Zuführen der Treibluft aus der Druckluftleitung 9 an der unmittelbar benachbart zum Materialbehälter 2 angeordneten Treibdüse 8 erfolgen.

Das Formwerkzeug 12, 13 ist mit zumindest einem Ventil (nicht dargestellt) versehen, das beim Zuführen von Schaumstoffpartikel geöffnet ist, damit die in dem Formraum 14 einströmenden Druckluft entweichen kann. Dieses Ventil kann beim Befüllen des Formraumes 14 derart eingestellt werden, dass sich im Formraum 14 ein Gegendruck bildet. Hierdurch kann der Druck in der Förderleitung und im Formraum 14 hochgehalten werden, wodurch die Schaumstoffpartikel auf einem kleinen Volumen gehalten werden. Dies erlaubt es, dass dem Formraum 14 mehr Schaumstoffpartikel zugeführt werden, als dies ohne Anlegen des Gegendrucks möglich wäre. Nach dem Zurücknehmen des Gegendruckes expandieren die Schaumstoffpartikel im Formraum 14.

Ein weiterer Parameter zur Einstellung der Füllmenge ist der Crack-Spalt, d. h., der Spalt, mit welchem die beiden Formhälften 12, 13 während des Füllens voneinander beabstandet angeordnet sind. Die Verwendung eines Crack-Spaltes beim Füllen erhöht vor allem die Dichte in dem dünnen Bereich des herzustellenden Partikelschaumstoffteils.

Sobald festgestellt wird, dass der Formraum 14 mit Schaumstoffpartikel gefüllt ist, wird der Füllinjektor 10 geschlossen. Die in der Leitung befindlichen Schaumstoffpartikel werden mit der an den Füllinjektor 10 zugeführten Druckluft in den Materialbehälter 2 zurückgeblasen.

Das Füllen des Formraums 14 mit Schaumstoffpartikel ist in der deutschen Patentanmeldung DE 10 2014 117 332 ausführlich beschrieben, weshalb diesbezüglich auf diese Patentanmeldung Bezug genommen wird.

Nach dem Befüllen des Formraums 14 mit Schaumstoffpartikeln werden diese durch Anlegen elektromagnetischer RF-Strahlung erhitzt. Diese RF-Strahlung wird erzeugt, indem an den Kondensatorplatten 15, 16 eine Hochfrequenzspannung von etwa 10⁴ V mit einer Frequenz von 27,12 MHz angelegt wird.

Die Schaumstoffpartikel sind auf Basis von Polyurethan (eTPU) ausgebildet. Polyurethan weist einen dielektrischen Verlustfaktor D von 0,2 bei einer elektromagnetischen Strahlung mit einer Frequenz von 1 MHz auf. Der dielektrische Verlustfaktor von Polypropylen (PP) bei einer elektromagnetischen Strahlung mit einer Frequenz von 1 MHz beträgt hingegen lediglich nur 0,00035. Die Absorptionsfähigkeit von Polyurethan ist daher wesentlich höher als die von Polypropylen. Hierdurch ist es möglich, ohne zusätzliche Wärme übertragende Stoffe, insbesondere wässrigen Lösungen, die zum Verschweißen der Schaumstoffpartikel notwendige Wärme in den Formraum 14 einzubringen, da die Schaumstoffpartikel selbst die elektromagnetischen Wellen absorbieren.

Anstelle von Schaumstoffpartikel auf Basis von Polyurethan können auch Schaumstoffpartikel auf Basis von Polyethylen-Block-Amid (PEBA) oder auf Basis von Polyethylen (PE) verwendet werden.

Die Dauer, über welche die elektromagnetische RF-Strahlung angelegt wird, hängt vom Volumen des Formraums 14, von der Dichte der Schaumstoffpartikel sowie von der angelegten elektrischen Leistung bzw. der angelegten elektrischen Spannung ab. In Versuchen hat sich gezeigt, dass in Abhängigkeit vom Volumen und vom Material, aus dem die Schaumstoffpartikel ausgebildet sind etwa 30 s bis etwa 2 min benötigt werden, um die Schaumstoffpartikel zuverlässig und vollständig zu verschweißen. Hierbei wurde eine elektrische Spannung von 5 kV bis 20 kV angelegt.

Vorzugsweise wird während des Verschweißens die Temperatur der Schaumstoffpartikel gemessen und die elektrische Leistung entsprechende geregelt. Die elektrische Leistung wird vorzugsweise derart geregelt, dass die Schaumstoffpartikel eine Temperatur geringfügig über ihrer Erweichungstemperatur innehaben.

Die dem Formraum 14 begrenzte Oberfläche kann zusätzlich temperiert werden. Hierzu können im Formwerkzeug Heizdrähte 34 angrenzend an die dem Formraum 14 begrenzende Oberfläche angeordnet sein. Die Heizdrähte 34 sind mit einer Stromquelle 35 verbunden, mit welcher ein Heizstrom in die Heizdrähte eingespeist werden kann.

Anstelle von Heizdrähten können auch Fluidkanäle in den Formhälften 12, 13 vorgesehen sein, durch welche ein entsprechendes temperiertes Fluid strömt. Vorzugsweise ist das Fluid Wasser bzw. Dampf.

Nach dem Anlegen der elektromagnetischen RF-Strahlung wird der Formraum 14 für eine vorbestimmte Zeitdauer geschlossen gehalten, wodurch sich die eingebrachte Wärme gleichmäßig im Partikelschaumstoffteil verteilt und eine sehr gleichmäßige Verschweißung zwischen allen Schaumstoffpartikeln ausbildet. Dieser Prozessschritt wird als Stabilisieren bezeichnet. Beim Stabilisieren findet auch eine geringfügige Abkühlung des Partikelschaumstoffteils statt. Da die Formhälften 12, 13 aus einem für elektromagnetische RF-Strahlung im Wesentlichen transparenten Material ausgebildet sind, das üblicherweise ein Kunststoffmaterial ist, das schlecht Wärme leitet, wird grundsätzlich beim geschlossenen Formraum 14 wenig Wärme nach außen abgegeben.

Aus Kunststoff ausgebildete Formhälften 12, 13 haben gegenüber aus Metall ausgebildeten Formhälften den Vorteil, dass sie einerseits wesentlich besser thermisch isolieren und andererseits eine geringere Wärmekapazität aufweisen. Hierdurch können die gewünschten Temperaturzyklen wesentlich schneller und mit weniger Energie durchgeführt werden, wobei die zugeführte Wärme fast vollständig den Schaumstoffpartikeln zugeführt wird.

Während der Dauer des Stabilisierens oder einem Teil der Dauer des Stabilisierens können die Kondensatorplatten 15, 16 durch die Kühleinrichtung 32, 33 aktiv gekühlt werden, wodurch den Grundkörpern der Formhälften 12, 13 und damit auch dem Partikelschaumstoffteil Wärme entzogen wird.

Nach dem Stabilisieren wird das Partikelschaumstoffteil entformt, indem die beiden Formhälften 12, 13 auseinander bewegt werden. Am Formwerkzeug können zum Entformen Entformstäbe vorgesehen sein, mit welchen das Partikelschaumstoffteil aus einer der beiden Formhälften 12, 13 gestoßen wird.

Das Stabilisieren ist ein optionaler Verfahrensschritt. Bei bestimmten Materialien und Formen kann er auch weg gelassen werden. Je größer das Volumen des herzustellenden Partikelschaumstoffteils ist, desto zweckmäßiger ist es, nach dem Verschweißen das Partikelschaumstoffteil im Formwerkzeug zu stabilisieren.

Zur Erhöhung des Durchsatzes kann bereits während des Füllens und/oder während des Schließens eines Crack-Spaltes die elektromagnetische RF-Strahlung angelegt werden.

Die RF-Strahlung kann bereits während dem Füllen oder auch erst nach dem Füllen des Formraums 14 mit Schaumstoffpartikeln zunächst mit geringer elektrischer Leistung bzw. geringer elektrischer Spannung angelegt werden, um das Material auf eine bestimmte Temperatur vorzuwärmen, um dann die elektrische Leistung bzw. elektrische Spannung allmählich oder schlagartig zu steigern.

Es kann auch sinnvoll sein, die Leistung bzw. die Spannung der elektromagnetischen RF-Strahlung allmählich zu erhöhen, so dass eine Rampe über eine Zeitdauer von beispielsweise 30 Sekunden bis 3 Minuten durch das allmähliche Ansteigen der elektrischen Leistung bzw. Spannung der elektromagnetischen RF-Strahlung ausgeführt wird. Hierdurch wird ein sehr gleichmäßiges Erhitzen der Schaumstoffpartikel erzielt.

Optional kann auch ein Unterdruck und/oder Vakuum an den Formraum 14 angelegt werden. Dies ist zweckmäßig, wenn die Schaumstoffpartikel und/oder die zugeführte Druckluft eine gewisse Feuchte aufweisen.

Das oben erläuterte Verfahren ist im Vergleich zum Verschweißen mit Dampf ein trockenes Verfahren. Hierdurch sind die hergestellten Partikelschaumstoffteile nach dem Produktionsvorgang trocken und können unmittelbar weiteren Verarbeitungsschritten zugeführt werden. Es kann auch zweckmäßig sein, die warmen Partikelschaumstoffteile zu entformen und einer weiteren Bearbeitung unmittelbar zu zuführen. Beispielsweise beim Herstellen von Schuhen kann eine Zwischensohle aus einem Partikelschaumstoffteil mit einem Profilkörper aus einem anderen Kunststoffmaterial verschweißt werden, wobei dann zum Verschweißen mit dem noch warmen bzw. noch heißen Partikelschaumstoffteil nicht mehr so viel Energie zu zuführen ist, als dies bei einem mit Dampf arbeitenden Verfahren der Fall wäre, bei dem das Partikelschaumstoffteil vollständig abgekühlt und getrocknet werden muss. Hierdurch können in der Produktion wesentliche Effizienzsteigerungen erzielt werden, da einerseits die Pausen zwischen einzelnen Prozessschritten verkürzt werden können, andererseits die zum Verschweißen der Schaumstoffpartikel eingebrachte Wärme auch für nachfolgende Verfahrensschritte zumindest zum Teil genutzt werden kann.

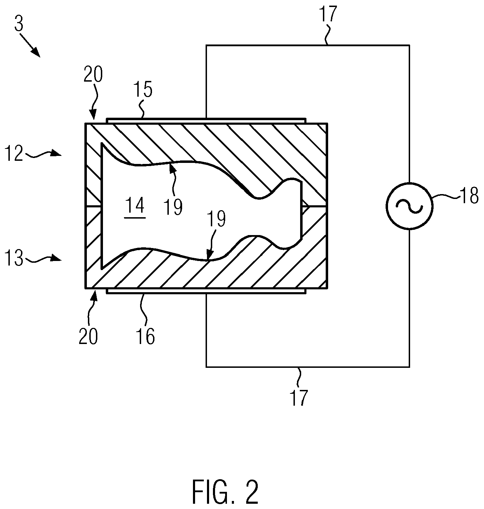

Nachfolgend werden unterschiedliche Werkzeug erläutert, die jeweils zwei Formhälften 12, 13 aufweisen und in der oben beschriebenen Vorrichtung 1 verwendet werden können. Diese Werkzeuge sind in den Figuren 2 bis 6 schematisch vereinfacht dargestellt. Der Füllinjektor 10, Thermometer zum Messen der Temperatur im Formraum und weitere mechanische Teile, wie z. B. Halteelemente, Bewegungseinrichtungen und dergleichen zum Öffnen und Schließen des Werkzeuges sind zur einfacheren zeichnerischen Darstellung weggelassen.

Das Formwerkzeug 3 gemäß einem zweiten Ausführungsbeispiel (Figur 2) ist wiederum aus zwei Formhälften 12, 13 ausgebildet, die jeweils einen Grundkörper aufweisen, der aus einem elektrisch nicht leitenden und insbesondere für elektromagnetische RF-Strahlung transparentem Material besteht. Dieses Material ist PTFE, PE, PEEK oder ein anderes für RF-Strahlung transparentes Material. Die Formhälften 12, 13 begrenzen einen Formraum 14. Im vorliegenden Ausführungsbeispiel weist der Formraum 14 Begrenzungsflächen 19 auf, welche eine von einer ebenen Fläche abweichende, konturierte Form besitzen. Die Formhälften 12, 13 weisen jeweils eine ebenflächige Außenfläche 20 auf, auf welche jeweils eine Kondensatorplatte 15, 16 angeordnet ist. Der Zwischenraum zwischen den konturierten Begrenzungsflächen 19 und den Außenflächen 20 wird jeweils durch das transparente Material ausgefüllt. Die Kondensatorplatten 15, 16 sind ebenflächig ausgebildet. Mit diesem Formwerkzeug 3 können dreidimensional konturierte Partikelschaumstoffteile erzeugt werden, wobei die Form des Partikelschaumstoffteils durch die inneren Begrenzungsflächen 19 der Formhälften 12, 13 definiert wird. Ein solches Formwerkzeug 3 ist besonders zum Herstellen von kleinen Partikelschaumstoffteilen mit im Wesentlichen gleichmäßiger Dichte geeignet.

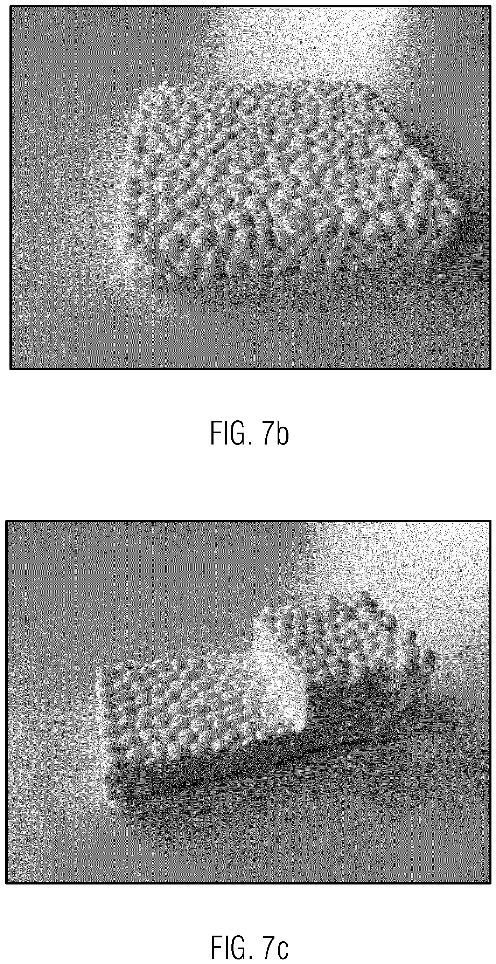

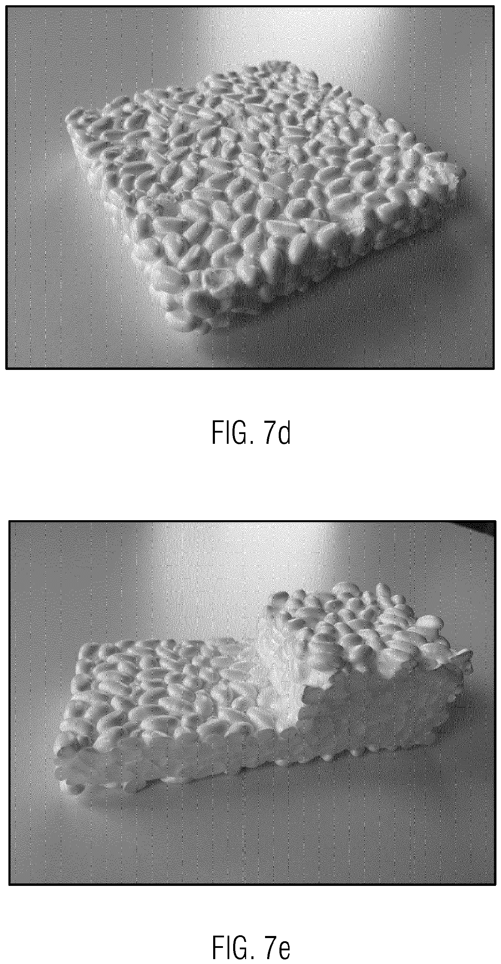

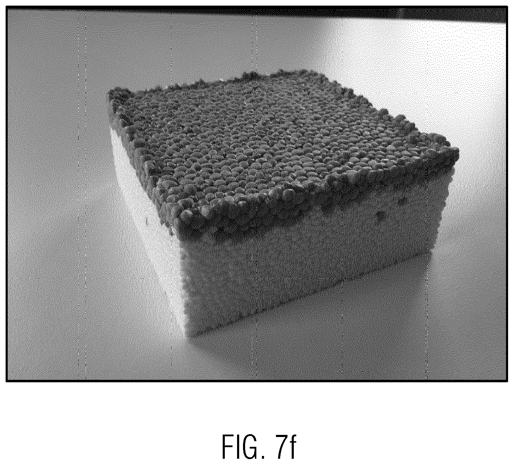

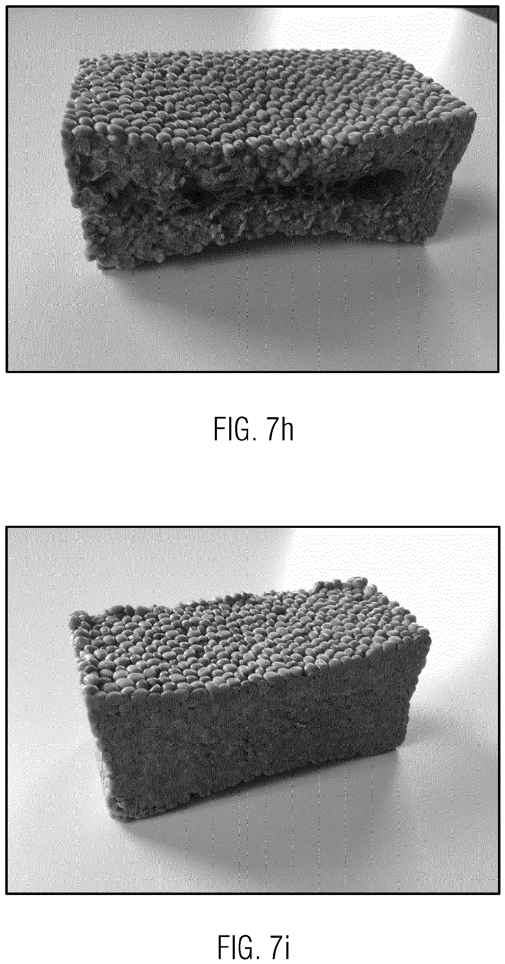

Bei großen bzw. dicken Partikelschaumstoffteilen besteht das Problem, dass sie sich stärker in der Mitte als im Randbereich erhitzen, wodurch die Partikelstruktur zerstört werden kann. Figur 7h zeigt ein Partikelschaumstoffteil aus Polylactat (PLA) mit einer Dicke von etwa 5 cm, das mit einer RF-Strahlung über die Dauer von 120 s erhitzt worden ist. Die RF-Strahlung wurde mit einer Frequenz von 27,12 MHz und mit einer Spannung von 9 kV angelegt. Da das Material selbst die elektromagnetischen Wellen absorbiert und ein schlechter Wärmeleiter ist, erhitzt sich der zentrale Bereich des Partikelschaumstoffteils stärker als der Randbereich, der mit dem Formwerkzeug 3 in Kontakt steht und durch das relativ kühle Formwerkzeug im Vergleich zum zentralen Bereich langsamer erhitzt wird. Dies kann zu einem vollständigen Aufschmelzen der Schaumstoffpartikel im zentralen Bereich des Partikelschaumstoffteils führen (Figur 7h). Um dies zu vermeiden, kann weniger Energie eingebracht werden. Figur 7e zeigt ein entsprechendes Partikelschaumstoffteil, das in der Mitte durchgeschnitten ist, das genauso wie das in Figur 7h gezeigte Partikelschaumstoffteil hergestellt worden ist, wobei hier jedoch die RF-Strahlung lediglich für eine Dauer von 90 s angelegt worden ist. Der mittige Bereich des Partikelschaumstoffteils ist homogen verschmolzen. Die Partikel am Randbereich haften zwar, könnten jedoch etwas stärker miteinander verschweißt sein.

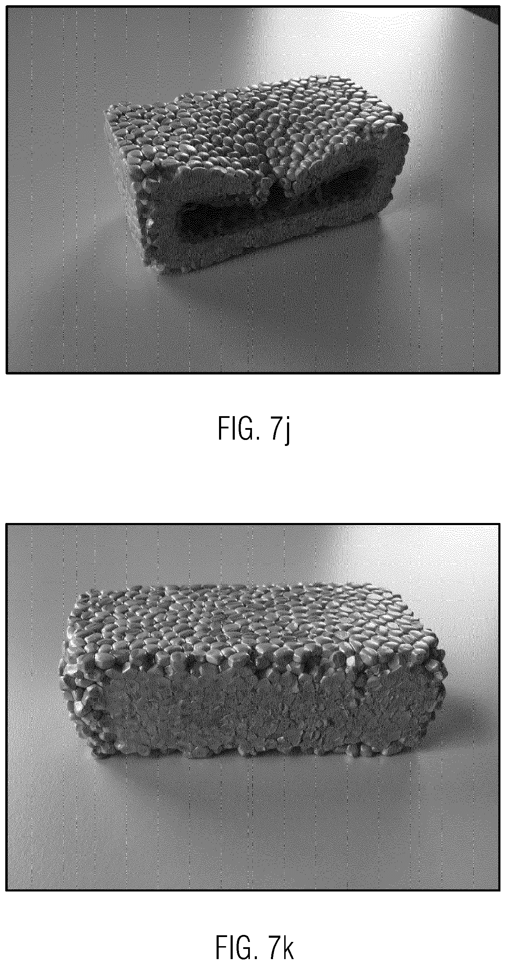

Die Figuren 7j und 7k zeigen entsprechende Bilder von aufgeschnitten Partikelschaumstoffteilen, die aus Polyethylenterephthalat (PET) hergestellt sind. Die RF-Strahlung wurde hier jeweils für eine Dauer von 300 s mit einer Frequenz von 27,12 MHz angelegt, wobei die Spannung bei dem in Figur 7j Partikelschaumstoffteil 10 kV und bei dem in Figur 7k gezeigten Partikelschaumstoffteil 7,5 kV betrug. Das in Figur 7j gezeigte Partikelschaumstoffteil weist eine zerstörte zentrale Partikelstruktur auf, wohingegen der zentrale Bereich des in Figur 7k gezeigten Partikelschaumstoffteils homogen verschmolzen ist.

Zur Vermeidung einer ungleichen Erhitzung des zentralen Bereiches und des Randbereiches eines Partikelschaumstoffteils kann das Formwerkzeug 3 temperiert und/oder den Schaumstoffpartikeln im Formraum 14 am Randbereich zusätzliche Wärme zugeführt werden.

Zum Temperieren des Formwerkzeuges 3 können die Formhälften 12, 13 mit Fluidkanälen ausgebildet sein, durch welche ein Fluid geleitet wird, das etwa auf die Erweichungstemperatur des im Formraum 14 befindlichen Materials temperiert ist, geleitet wird. Alternativ oder zusätzlich können zum Temperieren der Formwerkzeuge 3 Heizdrähte vorgesehen sein, wie es oben beschrieben ist. Hierdurch fließt beim Erhitzen der Schaumstoffpartikel keine Wärme von den Schaumstoffpartikeln in das Formwerkzeug 3, so dass die Schaumstoffpartikel im gesamten Formraum 14 gleichmäßig erhitzt werden. Es kann sogar zweckmäßig sein, das Formwerkzeug 3 auf eine Temperatur geringfügig über der Temperatur, die in den Schaumstoffpartikel zum Verschmelzen derselben durch Einbringen der RF-Strahlung eingestellt wird, zu erhitzen, um eine zuverlässige Verschweißung des Partikelschaumstoffteils im Bereich der Oberfläche sicherzustellen. Das Temperieren des Formwerkzeugs 3 kann auch bereits vor dem Verschweißen mit RF-Strahlung ausgeführt werden.

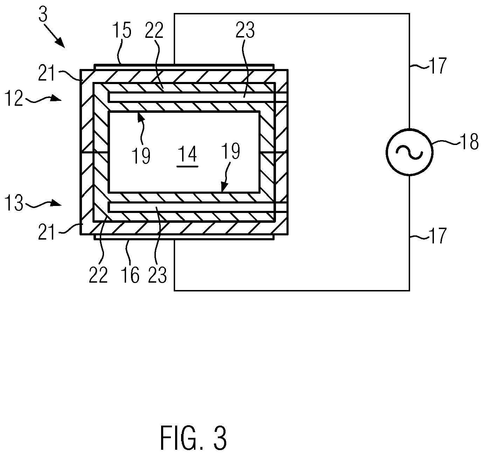

Figur 3 zeigt ein weiteres Ausführungsbeispiel eines Formwerkzeuges 3, das wiederum aus zwei Formhälften 12, 13 ausgebildet ist. An ebenflächigen Außenflächen 20 der Formhälften 12, 13 ist jeweils eine ebenflächige Kondensatorplatte 15, 16 angeordnet.

Die Formhälften 12, 13 sind zweiteilig aus einer äußeren nicht porösen Mantelwandung 21 und einem inneren porösen Formkörper 22 ausgebildet. Die porösen Formkörper 22 definieren die innere Begrenzungsfläche 19 zur Begrenzung des Formraumes 14. An den von der inneren Begrenzungsfläche 19 abgewandten Seiten sind die Formkörper 22 formschlüssig von der Mantelwandung 21 umgeben. Die Formhälften 12, 13 weisen jeweils einen oder mehrere Kanäle 23 auf, welche jeweils mit einer Öffnung an der Mantelwandung münden und sich in die porösen Formkörper 22 erstrecken und dort enden. Durch die Kanäle 23 kann ein heißes Medium in die Formhälften 12, 13 eingebracht werden, das sich im porösen Formkörper 22 verteilt und zum Teil in den Formraum 14 eintritt. Hierdurch werden einerseits die Schaumstoffpartikel im Randbereich des Formraumes 14 direkt durch das Medium erhitzt und andererseits werden auch die Formhälften 12, 13, insbesondere deren poröse Formkörper 22 temperiert. Als Medien können heiße Gase, insbesondere heiße Luft oder Dampf, verwendet werden.

Zum Kühlen des Formwerkzeugs bzw. des darin hergestellten Partikelschaumstoffteils kann es auch zweckmäßig sein, in die Kanäle 23 und damit in den Formraum 14 ein kühles Medium einzuleiten. Ein Medium ist kühl, wenn es kälter als die Formhälften 12, 13 oder kälter als das im Formraum 14 befindliche Partikelschaumstoffteil ist. Hierdurch kann das Stabilisieren des Partikelschaumstoffteils beschleunigt werden.

Sowohl die Mantelwandung als auch die Formkörper 22 sind jeweils aus für RF-Strahlung im Wesentlichen transparenten Materialien wie Polytetrafluorethylen (PTFE), Polyethlen, insbesondere UHMWPE, Polyetheretherketon (PEEK) ausgebildet. Die Formkörper 22 werden beispielsweise durch Sintern eines Granulates aus einem dieser Materialien hergestellt.

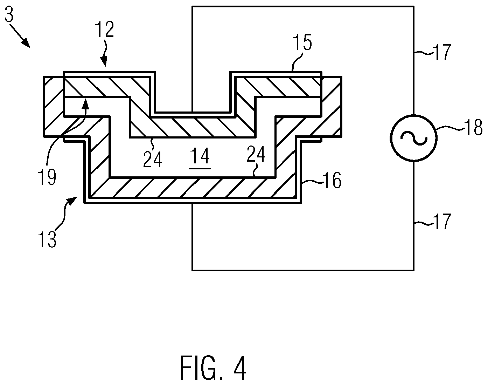

Eine weitere Alternative zur Temperierung der inneren Begrenzungsflächen 19 des Formwerkzeuges 3 besteht darin, die inneren Begrenzungsflächen 19 mit einer Schicht aus einem Material, das für RF-Strahlung nicht transparent ist, zu versehen. Diese Schicht wird im Folgenden als passive Heizschicht 24 (Figur 4) bezeichnet. Die passive Heizschicht kann aus einem temperaturstabilen, für RF-Strahlung nicht transparentem Material ausgebildet sein. Weitere geeignete Materialien für eine solche passive Heizschicht 24 sind Ferrite. Beim Anlegen von RF-Strahlung erwärmt sich die passive Heizschicht 24 und gibt die Wärme an die angrenzend angeordneten Schaumstoffpartikel ab.

Als passive Heizschicht 24 können auch Materialien mit einem moderaten Verlustfaktor verwendet werden, wie z. B. Polyoxymethylen (POM) und Polymethylmethacrylat (PMMA). Polyoxymethylen besitzt einen dielektrischen Verlustfaktor D von etwa 0,008 und Polymethylmethacrylat von etwa 0,02. Diese Heizschichten sind aufgrund des relativ geringen Verlustfaktors mit einer gewissen Dicke vorzusehen, die vorzugsweise zumindest 2 mm, insbesondere zumindest 2,5 mm und insbesondere zumindest 5 mm beträgt. Eine solche Heizschicht kann auch eine Dicke von 10 mm oder mehr aufweisen. Derartige Heizschichten können auch als separate Platten ausgebildet sein, die angrenzend an den inneren Begrenzungsflächen 19 der Formhälften 12, 13 angeordnet sind.

Die Heizschicht 24 kann nicht nur an den benachbart zu den Kondensatorplatten ausgebildeten Begrenzungsflächen 19, sondern auch an allen Begrenzungsflächen 19 der Formhälften 12, 13 vorgesehen sein, so dass sie das auszubildende Partikelschaumstoffteil vollständig umgeben. Gleiches gilt auch für die weiteren oben genannten Heiz- und Temperiereinrichtungen, wie Temperierkanäle oder Heizdrähte.

Die unterschiedlichen Möglichkeiten zum Temperieren der inneren Begrenzungsflächen 19, die oben aufgeführt sind, können auch in Kombination in einem Formwerkzeug verwendet werden.

Die oben erläuterten Ausführungsbeispiele der Formwerkzeuge 3 weisen jeweils ebenflächige Kondensatorplatten 15, 16 auf. Nach einer weiteren Ausführungsform der Formwerkzeuge 3 können diese so ausgebildet sein, dass die Kondensatorplatten 15, 16 an die Form des herzustellenden Partikelschaumstoffteils bzw. des Formraumes 14 angepasst sind. Das in Figur 4 gezeigte Ausführungsbeispiel zeigt zwei Formhälften 12, 13, die mit ihren inneren Begrenzungsflächen 19 einen stufenförmigen Formraum 14 begrenzen. Die Außenflächen 20 sind an die Kontur der entsprechenden inneren Begrenzungsflächen 19 der jeweiligen Formhälfte 12, 13 angepasst. Dies heißt mit anderen Worten, dass die inneren Begrenzungsflächen 19 auf die jeweiligen Außenflächen 20 der Formhälften 12, 13 abgebildet sind, wobei das Formwerkzeug 3 beispielsweise mit einer gleichmäßigen Dicke ausgebildet ist, um welche die Außenfläche 20 von der inneren Begrenzungsfläche 19 versetzt ist. An der Außenfläche 20 sind vorzugsweise kleine Strukturen der inneren Begrenzungsfläche 19 geglättet.

An den Außenflächen 20 sind die Kondensatorplatten 15, 16 als elektrisch leitende Schicht ausgebildet und besitzen im Wesentlichen die gleich Form bzw. Kontur wie die entsprechende Außenfläche 20 der jeweiligen Formhälfte 12, 13.

Da die Kondensatorplatten in der Form entsprechend der herzustellenden Partikelschaumstoffteile bzw. dem Formraum 14 angepasst sind, ist der Abstand zwischen den gegenüberliegenden Kondensatorplatten überall in etwa gleich groß, wodurch der Abstand der einander gegenüberliegenden Kondensatorplatten 15, 16 gering gehalten werden kann, so dass bei relativ geringer Spannung eine hohe elektrische Feldstärke erzielt wird.

Eine solche formmäßige Anpassung der Kondensatorplatten an die Form der herzustellenden Partikelschaumstoffteile ist insbesondere bei schalenförmigen Partikelschaumstoffteilen zweckmäßig. Solche schalenförmigen Partikelschaumstoffteile sind beispielsweise Kisten oder kugelsegmentförmige Schalen. Würde man eine solche Kiste zwischen zwei ebenflächigen Kondensatorplatten ausbilden, dann müsste der Abstand zwischen den Kondensatorplatten so groß sein, dass die gesamte Kiste dazwischen Platz hat. Bei der formmäßigen Anpassung der Kondensatorplatten kann der Abstand zwischen den beiden Kondensatorplatten lediglich etwas größer als die Dicke der Wandung des Partikelschaumstoffteils sein. Eine solche formmäßige Anpassung der Kondensatorplatten erlaubt daher, großvolumige, insbesondere schalenförmige Partikelschaumstoffteile herzustellen, wobei die Anforderungen an die Spannungsquelle gering gehalten werden, um ein ausreichendes elektrisches Feld zum Verschweißen der Schaumstoffpartikel bereitzustellen.

Bei Partikelschaumstoffteilen mit unterschiedlicher Dichte besteht das Problem, dass die Bereiche mit höherer Dichte mehr Wärme als die Bereiche mit geringerer Dichte absorbieren. Bereiche mit höherer Dichte entstehen beispielsweise beim Crack-Spalt-Verfahren, bei dem die beiden Formhälften 12, 13, nachdem sie bereits mit Schaumstoffpartikeln gefüllt sind, ein Stück zusammengedrückt werden, wodurch die darin enthaltenen Schaumstoffpartikel komprimiert werden. Die dünnen Bereiche des Formraums 14 werden relativ zu den dickeren Bereichen stärker zusammengedrückt, da der Verschiebeweg in allen Bereichen gleich groß ist. Hierdurch werden die Schaumstoffpartikel in den dünneren Bereichen stärker komprimiert.

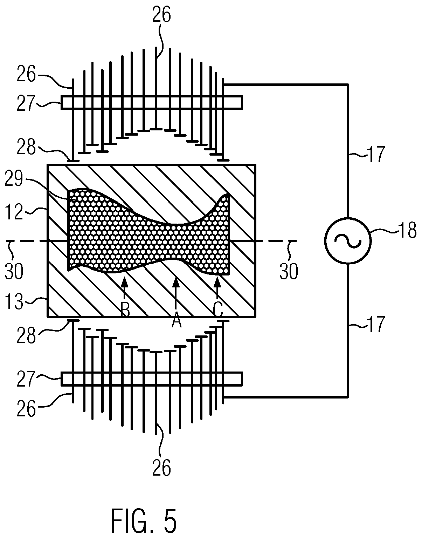

Figur 5 zeigt ein Ausführungsbeispiel eines Formwerkzeuges 3, bei dem die Kondensatorplatte 15, 16 jeweils in mehrere Segmente 25 unterteilt sind, deren Abstand zum Formraum 14 individuell einstellbar ist. Im vorliegenden Ausführungsbeispiel sind die Segmente 25 der Kondensatorplatten 15, 16 jeweils kleine quadratische Plättchen, die jeweils an einer Segmentstange 26 gekoppelt sind. Die Segmentstangen 26 sind mit der Wechselspannungsquelle 18 verbunden und stehen in elektrischen Kontakt zu den jeweiligen, elektrisch leitenden Plättchen, die die Kondensatorplatten 15, 16 ausbilden.

Die Segmentstangen 26 sind verschieblich in einer Halterung 27 angeordnet, in welcher sie in einer vorbestimmten Position fixierbar sind. Die Halterung 27 kann derart ausgebildet sein, dass die Segmentstangen 26 lösbar fixierbar sind, wodurch Segmentstangen 26 und damit die Kondensatorplättchen 28 in unterschiedlichen Positionen fixierbar sind. Die Halterungen 27 können jedoch auch zum einmaligen Fixieren der Segmentstangen 26 ausgebildet sein. Solche Halterungen 27 können beispielsweise aus einem Vergusskörper ausgebildet sein, der die Segmentstangen 26 zumindest bereichsweise umschließt und nach Anordnen der Segmentstangen 26 und der Kondensatorplättchen 28 in einer vorbestimmten gewünschten Anordnung ausgegossen wird. Solche einmal-fixierbaren Kondensatorplatten 15, 16 werden vor allem für Partikelschaumstoffteile verwendet, die sehr oft bzw. in großen Stückzahlen hergestellt werden und bei denen das entsprechende Werkzeug immer wieder gebraucht wird. Die Kondensatorplatten 15, 16 werden dann den entsprechenden Formhälften 12, 13 zugeordnet, mit welchen sie gemeinsam wiederholt benutzt werden.

Je größer der Abstand der Abschnitte der Kondensatorplatten 15, 16 zueinander ist, desto geringer ist das zwischen den jeweiligen Abschnitten erzeugte elektrische Feld. Deshalb werden die Kondensatorplättchen 28, die zu Bereichen des Formraums 14, in welchen die Schaumstoffpartikel bei der Herstellung eines Partikelschaumstoffteils in hoher Dichte vorliegen mit größerem Abstand zum Formraum als in den Bereichen, in welchen die Schaumstoffpartikel mit geringer Dichte vorliegen, angeordnet. Hierdurch kann kompensiert werden, dass die Bereiche mit höherer Dichte mehr Wärme als die Bereiche mit geringer Dichte absorbieren, so dass die Schaumstoffpartikel im Formraum 14 gleichmäßig erhitzt werden.

Bei dem in Figur 5 gezeigten Formwerkzeug 3 handelt es sich um ein Crack-Spalt-Formwerkzeug, das mit beabstandeten Formhälften 12, 13 mit Schaumstoffpartikel 29 gefüllt wird. Nach dem Füllen des Formwerkzeuges 3 werden die beiden Formhälften 12, 13 zusammengedrückt, wodurch die sich im Formraum 14 befindlichen Schaumstoffpartikel 29 komprimiert werden. Der in Figur 5 gezeigte Formraum 14 weist im Querschnitt unterschiedliche Dicken auf, wobei die Dicke im Bereich A ein Stück kleiner als in dem Bereich B und C ist. Dies hat zur Folge, dass die Schaumstoffpartikel 29 im Bereich A stärker als in den Bereichen B und C komprimiert werden, wodurch sie im Bereich A eine größere Dichte als in den Bereichen B und C aufweisen. Deshalb sind die Kondensatorplättchen 28, die benachbart zum Bereich A angeordnet sind bzw. zum Bereich A weisen, weiter entfernt von einer Mittenebene 30 als die Kondensatorplättchen 28, die zu den Bereichen B bzw. C weisen, angeordnet. Die Mittenebene 30 ist etwa mittig zwischen den beiden Kondensatorplatten 15,16 angeordnet.

Da mit der Erfindung die Schaumstoffpartikel vor allem durch unmittelbare Absorption der RF-Strahlung erhitzt werden, d. h. dass die Wärme nicht oder nur zu einem geringen Teil über ein wärmevermittelndes Medium, das die RF-Strahlung absorbiert und an die Schaumstoffpartikel abgibt, kann die Temperatur im Formraum nicht durch Parameter, die auf ein wärmeübertragendes Medium einwirken, gesteuert werden. Im Stand der Technik ist es beispielsweise bekannt, als wärmeübertragendes Medium Wasser zu verwenden und die Temperatur im Formraum durch Einstellen des Druckes zu regeln. Durch die überwiegend unmittelbare Absorption können die Schaumstoffpartikel an sich beliebig heiß werden und sich in unterschiedlich dichten Bereichen unterschiedlich stark erhitzen.

Es besteht grundsätzlich das Bestreben, die Schaumstoffpartikel im Formraum möglichst gleichmäßig zu erhitzen, sofern sie aus dem gleichen Material ausgebildet sind. Durch das Formen des elektrischen Feldes mit Bereichen unterschiedlicher Intensität bzw. unterschiedlicher Feldstärke durch abschnittsweises Variieren des Abstandes der Kondensatorplatten 15, 16 zum Formraum 14 bzw. zur Mittenebene 30 kann eine gleichmäßige Erhitzung der Schaumstoffpartikel im Formraum 14 erzielt werden, selbst wenn sie dort mit unterschiedlicher Dichte angeordnet sind. Daher kann es vorteilhaft sein, Kondensatorplatten 15, 16 mit einer nicht ebenflächigen Konfiguration vorzusehen.

Bei dem in Figur 5 dargestellten Ausführungsbeispiel sind die Kondensatorplatten 15, 16 segmentförmig aus Kondensatorplättchen 28 ausgebildet, deren Position individuell festlegbar ist.

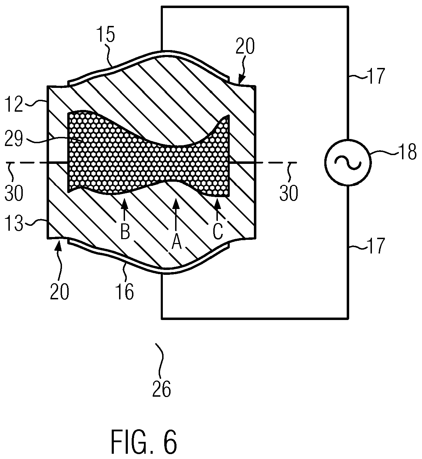

Figur 6 zeigt eine weitere Ausführungsform des Formwerkzeuges 3, bei dem die Formhälften 12, 13 mit ähnlichen inneren Begrenzungsflächen 19 wie bei der in Figur 5 gezeigten Ausführungsform ausgebildet sind. Dieses Formwerkzeug 3 zeichnet sich dadurch aus, dass die Außenflächen 20 eine konturierte Form aufweisen, so dass Abschnitte der Außenfläche 20 unterschiedlich weit von der Mittenebene 30 beabstandet sind. Auf den konturierten Außenflächen 20 sind die Kondensatorplatten 15, 16 aufgebracht, wobei sie in ihrer Form an den konturierten Außenflächen 20 angepasst sind. Die Kondensatorplatten 15, 16 können beispielsweise durch eine elektrisch leitende Beschichtung hergestellt sein, welche auf die Außenflächen 20 der Formhälften 12, 13 aufgetragen wird. Die Kondensatorplatten 15, 16 können auch als biegsame Blechteile ausgebildet sein, welche aus einem elektrisch gut leitenden Metall bzw. einer elektrisch gut leitenden Metalllegierung bestehen und in der Form an die Außenfläche 20 angepasst sind und auf die Außenflächen geklebt sind.

Auch bei dieser Ausführungsform 30 sind genauso wie bei der in Figur 5 gezeigten Ausführungsform Abschnitte der Kondensatorplatten 15, 16 unterschiedlich weit von der Mittenebene 30 bzw. vom Formraum 14 beabstandet, wodurch im Formraum 14 Bereiche mit unterschiedlicher elektrischer Feldstärke erzeugt werden. Bei Bereichen mit höherer Verdichtung der Schaumstoffpartikel 29 (A) ist der Abstand der gegenüberliegenden Abschnitte der Kondensatorplatten 15, 16 größer als bei den Bereichen B, C, in welchen die Verdichtung der Schaumstoffpartikel 29 geringer ist. Der Abstand der einzelnen Abschnitte der Kondensatorplatten 15, 16 zur Mittenebene 30 ist etwa proportional zu der Dichte der Schaumstoffpartikel 29 in den Bereichen zwischen den aneinander gegenüberliegenden Abschnitten der Kondensatorplatten 15, 16. Der Proportionalitätsfaktor unterscheidet sich zwischen den unterschiedlichen Materialien und hängt von deren Absorptionsfähigkeit der RF-Strahlung ab.

Formwerkzeuge 3 zur Herstellung großer Partikelschaumstoffteile können mehrere separate Segmente von Kondensatorplatten 15, 16 aufweisen. Es ist zweckmäßig, dass die Kondensatorplatten in keiner Richtung größer als ein Viertel der Wellenlänge der RF-Strahlung sind. Bei einer Frequenz von 27,12 MHz beträgt die Wellenlänge λ etwa 11 Meter. Die maximale Erstreckung der Segmente der Kondensatorplatten sollte daher nicht größer als etwa 2,75 Meter sein. In der Praxis hat sich gezeigt, dass Kondensatorplatten bis zu einer Größe von etwa zwei Meter ein sehr gleichmäßiges elektrisches Feld bei einer Frequenz von 27,12 MHz erzeugen. Sind die Kondensatorplatten größer als λ/4, dann wird die Abstrahlung der einzelnen Punkte der Kondensatorplatten unterschiedlich und sie strahlen nicht mehr synchron ab. Bei Kondensatorplatten, die größer als λ/4 sind, ist es zweckmäßig verteilte Induktivitäten an der Kondensatorplatte vorzusehen, die jeweils ein LC-Glied bilden. Hierdurch kann die Synchronität der Schwingungen der unterschiedlichen Abschnitte der Kondensatorplatten wieder hergestellt werden. Das Vorsehen derartiger LC-Glieder ist jedoch sehr aufwändig. Es kann deshalb zweckmäßiger sein, die Kondensatorplatten in separate Abschnitte zu unterteilen, die unabhängig voneinander mit einer Wechselspannung beaufschlagt werden.

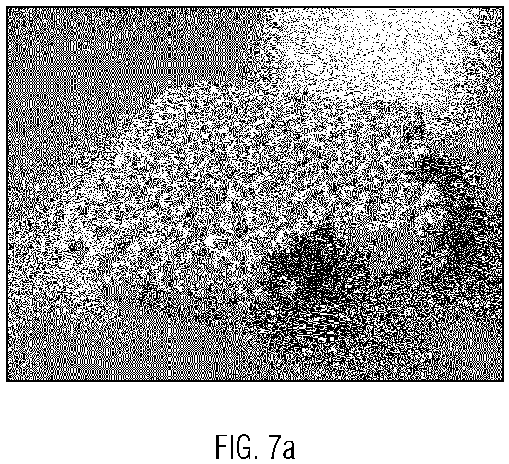

In den Figuren 7a bis 7k sind Bilder von Partikelschaumstoffteilen gezeigt, die zum Teil geschnitten sind, die mit RF-Strahlung ohne wärmeübertragendes Medium und ohne zusätzliche Temperierung des Formwerkzeugs aus Schaumstoffpartikel verschweißt worden sind. In folgender Tabelle sind die Parameter der Spannung U, der Dauer t, des elektrischen Verlustfaktors D bei 1 MHz und Raumtemperatur, die Bezeichnung des Materials und der Bezug zur Figur angegeben.

| **Figur** | **Material** | **U [kV]** | **T [s]** | **D** |
|---|---|---|---|---|
| 7a | ePEBA | 7,5 | 50 | 0,12 |
| 7b | eTPU | 7,5 | 25 | 0,112 |
| 7c | eTPU | 7,5 | 50 | 0,112 |
| 7d | eTPU | 9 | 30 | 0,112 |
| 7e | eTPU | 9 | 60 | 0,112 |
| 7f | PLA | 9 | 70 | < 0,1 |
| 7g | PLA | 9 | 70 | < 0,1 |
| 7h | PLA | 9 | 120 | < 0,1 |
| 7i | PLA | 9 | 90 | < 0,1 |
| 7j | PET | 10 | 300 | 0,014-0,048 |
| 7k | PET | 7,5 | 300 | 0,014-0,048 |

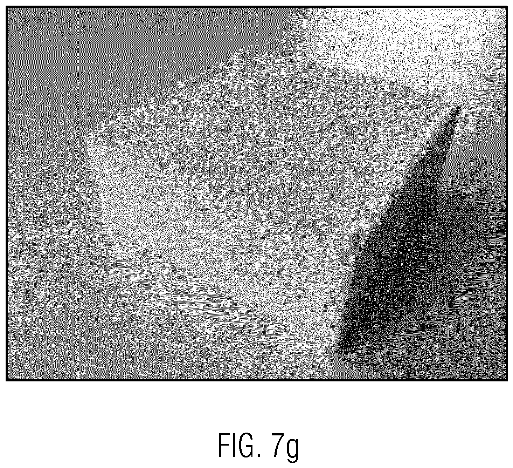

Es hat sich gezeigt, dass alle Materialien ePEBA (Polyether-Block-Amide), eTPU (expandiertes thermoplastisches Polyurethan), PLA (Polylactat) und PET (Polyethylenterephthalat) sich alleine durch Eintragung der Wärme mittels RF-Strahlung gut verschweißen haben lassen. Bei dem in Figur 7g gezeigten Beispiel wurde ein Partikelschaumstoffteil aus zwei unterschiedlich dichten Schaumstoffpartikeln hergestellt. Die in Figur 7g oben gelegenen Schaumstoffpartikeln sind dunkel eingefärbt und besitzen eine geringere Dichte als die darunter befindlichen Schaumstoffpartikel, da die dunkel eingefärbten Schaumstoffpartikel grobkörniger als die hellen Schaumstoffpartikel sind.

Die obigen Beispiele zeigen, dass mit dem erfindungsgemäßen Verfahren unterschiedlichste Materialien verarbeitet werden können. PET ist zu 100 % recyclebar. PET wird in großen Mengen kostengünstig aus einem Recyclingprozess gewonnen. PET ist bisher das bevorzugte Material für Kunststoff-Getränkeflaschen. Es ist zudem sehr hart und erlaubt die Herstellung von Partikelschaumstoffkörpern mit ähnlichen Eigenschaften wie Partikelschaumstoffkörper aus expandiertem Polypropylen (ePP).

PLA ist auch 100 % recyclebar, vollständig biologisch abbaubar und hat mechanische Eigenschaften wie Partikelschaumstoffteile aus expandiertem Polystyrol (ePS). Erste Messungen haben ergeben, dass PLA einen dielektrischen Verlustfaktor im Bereich von etwa 0,1 bis 0,01 aufweist. Genaue Messungen liegen noch nicht vor. PLA besitzt eine Erweichungstemperatur von ca. 100°C. Im Vergleich dazu beträgt die Erweichungstemperatur von eTPU etwa 125°C bis 130°C und die von Polyethylenterephtalat etwa 200°C bis 260°C.

ePEBA ist sehr leicht und hochelastisch. Es hat ähnliche Eigenschaften wie Partikelschaumstoffteile aus expandiertem thermoplastischen Polyurethan.

Die Erfindung kann folgendermaßen zusammengefasst werden:
Die Erfindung betrifft ein Verfahren zur Herstellung eines Partikelschaumstoffteils. Schaumstoffpartikel werden in einem Formwerkzeug erhitzt, so dass sie zum Partikelschaumstoffteil verschweißt sind. Den Schaumstoffpartikeln wird Wärme mittels elektromagnetischer RF-Strahlung zugeführt. Die Schaumstoffpartikel sind aus Polyurethan, Polyethylen-Block-Amid (PEBA), Polylactat (PLA) oder Polyethylenterephtalat (PET) ausgebildet.

### Bezuaszeichenliste

- 1: Vorrichtung
- 2: Materialbehälter
- 3: Formwerkzeug
- 4: Leitung
- 5: Boden
- 6: Druckluftleitung
- 7: Druckluftquelle
- 8: Treibdüse
- 9: Druckluftleitung
- 10: Füllinjektor
- 11: Druckluftleitung
- 12: Formhälfte
- 13: Formhälfte
- 14: Formraum
- 15: Kondensatorplatte
- 16: Kondensatorplatte
- 17: elektrische Leitung
- 18: Wechselspannungsquelle
- 19: Begrenzungsfläche (innen)
- 20: Außenfläche
- 21: Mantelwandung (nicht porös)
- 22: Formkörper (porös)
- 23: Kanal
- 24: passive Heizschicht
- 25: Segment
- 26: Segmentstange
- 27: Halterung
- 28: Kondensatorplättchen
- 29: Schaumstoffpartikel
- 30: Mittenebene
- 31: Unterdruckpumpe
- 32: Ventilator
- 33: Kühlrippe
- 34: Heizdraht
- 35: Stromquelle

## Patentansprüche

1. Verfahren zur Herstellung eines Partikelschaumstoffteils, indem Schaumstoffpartikel in einen Formwerkzeug (3) erhitzt werden, so dass sie zum Partikelschaumstoffteil verschweißen, wobei den Schaumstoffpartikeln Wärme mittels elektromagnetischer RF-Strahlung zugeführt wird, **dadurch gekennzeichnet, dass** die Schaumstoffpartikel aus Polyurethan, Polylactat, Polyethylen-Block-Amid (PEBA) oder aus Polyethylenterephtalat ausgebildet sind.

2. Verfahren nach Anspruch 1,
**dadurch gekennzeichnet,**
**dass** die RF-Strahlung eine Frequenz von zumindest 1 MHz und/oder von maximal 100 MHz aufweist.

3. Verfahren nach Anspruch 1 oder 2,
**dadurch gekennzeichnet,**
**dass** die Schaumstoffpartikel aus einem einheitlichen Material bestehen.

4. Verfahren nach einem der Ansprüche 1 bis 3,
**dadurch gekennzeichnet,**
**dass** die Schaumstoffpartikel im Formwerkzeug (3) komprimiert werden.

5. Verfahren nach einem der Ansprüche 1 bis 4,
**dadurch gekennzeichnet,**
**dass** die Temperatur der im Formwerkzeug (3) befindlichen Schaumstoffpartikel gemessen wird, wobei die Zuführung der Wärme mittels elektromagnetischer RF-Strahlung in Abhängigkeit der gemessenen Temperatur gesteuert wird.

6. Verfahren nach einem der Ansprüche 1 bis 5,
**dadurch gekennzeichnet,**
**dass** die einen Formraum (14) begrenzende Oberfläche des Formwerkzeuges (3) temperiert wird.

7. Verfahren nach einem der Ansprüche 1 bis 6,
**dadurch gekennzeichnet,**
**dass** an das Formwerkzeug (3) ein Unterdruck angelegt wird, so dass darin enthaltene Gase und/oder Feuchtigkeit abgezogen wird.

8. Verfahren nach einem der Ansprüche 1 bis 7,
**dadurch gekennzeichnet,**
**dass** eine Vorrichtung zur Herstellung eines Partikelschaumstoffteils verwendet wird, umfassend
ein Formwerkzeug (3), das einen Formraum (14) begrenzt, wobei benachbart zum Formraum zumindest zwei Kondensatorplatten (15, 16) angeordnet sind, welche mit einer RF-Strahlungsquelle verbunden sind, wobei die RF-Strahlungsquelle zum Abgeben von RF Strahlung ausgebildet ist.

9. Verfahren nach Anspruch 8,
**dadurch gekennzeichnet,**
**dass** die Kondensatorplatten (15, 16) des Formwerkzeugs (3) an die Kontur von inneren Begrenzungsflächen des Formwerkzeuges angepasst sind.

10. Verfahren nach Anspruch 9,
**dadurch gekennzeichnet,**
**dass** das Formwerkzeug (3) aus einem für elektromagnetische RF-Strahlung im Wesentlichen transparenten Material ausgebildet ist, und/oder dass das Formwerkzeug (3) im Bereich zwischen den jeweiligen Kondensatorplatten (15, 16) unterschiedliche Dicken aufweist, so dass der Formraum (14) durch dreidimensional konturierte innere Begrenzungsflächen (19) begrenzt ist, und/oder
**dass** die Kondensatorplatten (15, 16) eine dreidimensional konturierte Form aufweisen, wobei ein Abschnitt der Kondensatorplatten, der zu einem Bereich des Formraumes weist, in dem bei Benutzung die Schaumstoffpartikel stärker verdichtet als in einem anderen Bereich sind weiter entfernt vom Formraum (14) angeordnet ist, als ein Abschnitte der Kondensatorplatten (15, 16), der zu einem Bereich des Formraums weist, in dem die Schaumstoffpartikel weniger verdichtet sind.

11. Vorrichtung zur Herstellung eines Partikelschaumstoffteils, umfassend
ein Formwerkzeug (3), das einen Formraum (14) begrenzt, wobei benachbart zum Formraum zumindest zwei Kondensatorplatten (15, 16) angeordnet sind, welche mit einer RF-Strahlungsquelle verbunden sind, wobei die RF-Strahlungsquelle zum Abgeben von RF Strahlung ausgebildet ist,
wobei das Formwerkzeug (3) Mittel zum Zuführen eines Heizmediums zu den an den inneren Begrenzungsflächen anliegenden Bereichen, aufweisen, **dadurch gekennzeichnet, dass** das Formwerkzeug (3) einen porösen Formkörper (22) umfasst, der zumindest einen Teil der inneren Begrenzungsfläche (19) ausbildet und kommunizierend mit einer Einrichtung zum Zuführen eines Heizfluids verbunden ist.

12. Vorrichtung nach Anspruch 11, **dadurch gekennzeichnet,**
**dass** das Formwerkzeug zumindest einen Kanal (23) zum Zuführen bzw. Durchleiten eines Heizfluids aufweist, und/oder dass das Formwerkzeug an seiner inneren Begrenzungsfläche (19) mit einer passiven Heizschicht (24) aus einem für RF-Strahlung nicht transparenten Material und/oder einer elektrischen Heizeinrichtung (34) versehen ist, wobei die passive Heizschicht vorzugsweise aus einem Ferrit ausgebildet ist.

13. Vorrichtung zur Herstellung eines Partikelschaumstoffteils nach Anspruch 11 oder 12,
**dadurch gekennzeichnet,**
**dass** die Kondensatorplatten (15, 16) jeweils aus mehreren Segmenten (28) ausgebildet sind, welche unabhängig voneinander im Abstand zum Formraum (14) wiederholt oder einmalig einstellbar sind.

14. Vorrichtung nach einem der Ansprüche 11 bis 13,
**dadurch gekennzeichnet,**
**dass** die RF-Strahlungsquelle zum Abgeben von RF Strahlung ausgebildet ist, eine Frequenz von zumindest 1 MHz und/oder von maximal 100 MHz aufweist.

15. Verfahren nach einem der Ansprüche 1 bis 10,
**dadurch gekennzeichnet,**
**dass** eine Vorrichtung nach einem der Ansprüche 11 bis 14 verwendet wird.

## Claims

1. Method for manufacturing a particle foam material part wherein foam material particles are heated in a moulding tool (3), such that they are heat-sealed to the particle foam material part, whereby heat is applied to the foam material particles by means of electromagnetic RF radiation, **characterised in that** the foam material particles are made of polyurethane, polylactate, polyether block amide (PEBA) or of polyethylene terephthalate.

2. Method according to Claim 1, **characterised in that**
the RF radiation has a frequency of at least 1 MHz and/or maximum 100 MHz.

3. Method according to Claim 1 or 2, **characterised in that**
the foam material particles consist of a uniform material.

4. Method according to one of Claims 1 to 3,
**characterised in that**
the foam material particles are compressed in the moulding tool (3).

5. Method according to one of Claims 1 to 4,
**characterised in that**
the temperature of the foam material particles present in the moulding tool (3) is measured, whereby the application of the heat by means of electromagnetic RF radiation is controlled according to the measured temperature.

6. Method according to one of Claims 1 to 5,
**characterised in that**
the temperature of the surface of the moulding tool (3) delimiting a moulding space (14) is controlled.

7. Method according to one of Claims 1 to 6,
**characterised in that**
low pressure is applied to the moulding tool (3), so that gas and/or moisture contained therein are removed.

8. Method according to one of Claims 1 to 7,
**characterised in that**
a device used for manufacturing a particle foam material part is used that comprises
a moulding tool (3) that delimits a moulding space (14), whereby at least two condenser plates (15, 16) arranged adjacent to the moulding space are connected to a source of RF radiation, whereby the source of RF radiation is made to emit RF radiation.

9. Method according to Claim 8,
**characterised in that**
the condenser plates (15, 16) of the moulding tool (3) are matched to the contour of inner delimiting surfaces of the moulding tool.

10. Method according to Claim 9,
**characterised in that**,
the moulding tool (3) is made from a material essentially transparent to electromagnetic RF radiation, and/or **in that** the moulding tool (3) has different thickness values in the area between the respective condenser plates (15, 16), such that the moulding space (14) is delimited by three-dimensionally contoured inner delimiting surfaces (19) and/or **in that** the condenser plates (15, 16) have a three-dimensionally contoured shape, whereby a section of the condenser plates, which points to an area of the moulding space, in which the foam material particles are compressed more strongly during use than in another area, is arranged further away from the moulding space (14) than a section of the condenser plates (15, 16), which points to an area of the moulding space in which the foam material particles are compressed less.

11. Device for manufacturing a particle foam material part, comprising a moulding tool (3) that delimits a moulding space (14), whereby at least two condenser plates (15, 16) arranged adjacent to the moulding space, are connected to a source of RF radiation, whereby the source of RF radiation is made to emit RF radiation,
whereby the moulding tool (3) has means for supplying a heating medium to the areas adjoining the inner delimiting surfaces, **characterised in that**
the moulding tool (3) comprises a porous moulding body (22), which forms at least one part of the inner delimiting surface (19) and is connected in communication with a unit for supplying a heating fluid.

12. Device according to Claim 11, **characterised in that**
the moulding tool has at least one channel (23) for supplying or conducting a heating fluid, and/or **in that** the moulding tool is provided at its inner delimiting surface (19) with a passive heating layer (24) in a material not transparent to RF radiation and/or an electric heating unit (34), whereby the passive heating layer is preferably made from a ferrite material.

13. Device for manufacturing a particle foam material part according to Claim 11 or 12, **characterised in that**
the condenser plates (15, 16) are made respectively of several segments (28), which can be adjusted in distance to the moulding space (14) repeatedly or once, independently of each other.

14. Device according to one of Claims 11 to 13,
**characterised in that**
the source of RF radiation made to emit RF radiation has a frequency of at least 1 MHz and/or maximum 100 MHz.

15. Method according to one of Claims 1 to 10,
**characterised in that**,
a device according to one of Claims 11 to 14 is used.

## Revendications

1. Procédé de fabrication d'une pièce en mousse particulaire, en chauffant des particules de mousse dans un moule (3), de sorte qu'elles se soudent pour former la pièce en mousse particulaire, dans lequel les particules de mousse sont alimentées en chaleur au moyen d'un rayonnement électromagnétique RF, **caractérisé en ce que** les particules de mousse sont réalisées en polyuréthane, polylactate, polyéthylène bloc amide (PEBA) ou en polyéthylène téréphtalate.

2. Procédé selon la revendication 1,
**caractérisé en ce que**,
le rayonnement RF présente une fréquence d'au moins 1 MHz et/ou d'un maximum de 100 MHz.

3. Procédé selon la revendication 1 ou 2,
**caractérisé en ce que**,
les particules de mousse sont constituées d'un matériau uniforme.

4. Procédé selon une des revendications 1 à 3,
**caractérisé en ce que**,
les particules de mousse sont comprimées dans le moule (3).

5. Procédé selon une des revendications 1 à 4,
**caractérisé en ce que**,
la température des particules de mousse se trouvant dans le moule (3) est mesurée, dans lequel l'alimentation en chaleur est commandée au moyen d'un rayonnement électromagnétique RF en fonction de la température mesurée.

6. Procédé selon une des revendications 1 à 5,
**caractérisé en ce que**,
la surface du moule (3) délimitant un espace de moule (14) est trempée.

7. Procédé selon une des revendications 1 à 6,
**caractérisé en ce que**,
une pression négative est appliquée au moule (3), de sorte que les gaz et/ou l'humidité qu'il contient soient aspirés.

8. Procédé selon une des revendications 1 à 7,
**caractérisé en ce que**,
un dispositif de fabrication d'une pièce en mousse particulaire est utilisé, comprenant
un moule (3), qui délimite un espace de moule (14), dans lequel au moins deux plaques de condensateur (15, 16) jouxtent l'espace de moule, qui sont reliées à une source de rayonnement RF, dans lequel la source de rayonnement RF est conçue pour émettre un rayonnement RF.

9. Procédé selon la revendication 8,
**caractérisé en ce que**,
les plaques de condensateur (15, 16) du moule (3) sont adaptées au contour des surfaces de délimitation intérieures du moule.

10. Procédé selon la revendication 9,
**caractérisé en ce que**,
le moule (3) est constitué d'un matériau qui est essentiellement transparent au rayonnement RF électromagnétique, et/ou que le moule (3) présente des épaisseurs différentes dans la zone entre les plaques de condensateur respectives (15, 16), de sorte que l'espace de moule (14) soit délimité par des surfaces de délimitation intérieures profilées en trois dimensions (19), et/ou **en ce que** les plaques de condensateur (15, 16) présentent une forme profilée en trois dimensions, dans lequel une section des plaques de condensateur, qui fait face à une région de l'espace de moule, dans laquelle lors de l'utilisation les particules de mousse sont plus compactées que dans une autre zone soit disposée plus loin de l'espace de moule (14) qu'une section des plaques de condensateur (15, 16), qui fait face à une région de l'espace de moule, dans laquelle les particules de mousse sont moins compactées.

11. Dispositif de fabrication d'une pièce en mousse particulaire, comprenant un moule (3), qui délimite un espace de moule (14), dans lequel au moins deux plaques de condensateur (15, 16) jouxtent l'espace de moule, qui sont reliées à une source de rayonnement RF, dans lequel la source de rayonnement RF est conçue pour émettre un rayonnement RF, dans lequel le moule (3) présente des moyens pour alimenter un milieu chauffant dans les zones adjacentes aux surfaces de délimitation intérieures, **caractérisé en ce que** le moule (3) comprend un corps moulé poreux (22), qui forme au moins une partie de la surface de délimitation intérieure (19) et qui est relié de manière communicante à un dispositif d'alimentation en fluide chauffant.

12. Dispositif selon la revendication 11, **caractérisé en ce que**,
le moule comporte au moins un canal (23) d'alimentation ou de passage d'un fluide chauffant, et/ou que le moule est pourvu sur sa surface de délimitation intérieure (19) d'une couche chauffante passive (24) réalisée en un matériau non transparent au rayonnement RF et/ou d'un dispositif de chauffage électrique (34), dans lequel la couche chauffante passive est de préférence formée d'une ferrite.

13. Dispositif de fabrication d'une pièce en mousse particulaire selon la revendication 11 ou 12,
**caractérisé en ce que**,
les plaques de condensateur (15, 16) sont chacune formées d'une pluralité de segments (28), qui peuvent être placés à plusieurs reprises ou une seule fois à distance de l'espace de moule (14) indépendamment les uns des autres.

14. Dispositif selon une des revendications 11 à 13,
**caractérisé en ce que**,
la source de rayonnement RF est conçue pour émettre un rayonnement RF, a une fréquence d'au moins 1 MHz et/ou d'un maximum de 100 MHz.

15. Procédé selon une des revendications 1 à 10,
**caractérisé en ce que**,
un dispositif selon une des revendications 11 à 14 est utilisé.
